(19) Europäisches Patentamt
European Patent Office
Office européen des brevets

(11) **EP 4 749 350 A1**

(12) **EUROPEAN PATENT APPLICATION**
published in accordance with Art. 153(4) EPC

(43) Date of publication:
**27.05.2026 Bulletin 2026/22**

(21) Application number: **24876160.3**

(22) Date of filing: **19.07.2024**

(51) International Patent Classification (IPC):
**G02B 27/01** (2006.01)    **G02B 27/28** (2006.01)
**G02B 1/04** (2006.01)

(52) Cooperative Patent Classification (CPC):
**G02B 1/04; G02B 27/01; G02B 27/28**

(86) International application number:
**PCT/CN2024/106298**

(87) International publication number:
**WO 2025/077339 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.10.2023 CN 202311323567**

(71) Applicant: **Honor Device Co., Ltd.
Shenzhen, Guangdong 518040 (CN)**

(72) Inventors:
• **LIANG, Hailiang
 Shenzhen, Guangdong 518040 (CN)**
• **DING, Zhicheng
 Shenzhen, Guangdong 518040 (CN)**
• **YAN, Bin
 Shenzhen, Guangdong 518040 (CN)**

(74) Representative: **Epping - Hermann - Fischer
Patentanwaltsgesellschaft mbH
Schloßschmidstraße 5
80639 München (DE)**

(54) **LENS ASSEMBLY, OPTICAL SYSTEM AND DISPLAY DEVICE**

(57) Embodiments of this application relate to the field of display technologies, and provide a lens assembly, an optical system, and a display device. The lens assembly includes a plurality of lenses sequentially arranged from an object side to an image side, an optical splitting element, a first quarter-wave plate, and a reflective polarization element that are sequentially arranged from the object side to the image side, and a lens barrel. At least one of the first quarter-wave plate and the reflective polarization element is independent of the plurality of lenses and fastened to the lens barrel; or object side surfaces and image side surfaces of the plurality of lenses include at least one bonding surface, and at least one of the first quarter-wave plate and the reflective polarization element is bonded to the bonding surface. The bonding surface is a quadric surface whose curvature is zero in at least one direction.

FIG. 1C

EP 4 749 350 A1

**Description**

**CROSS-REFERENCE TO RELATED APPLICATIONS**

This application claims priority to Chinese Patent Application No. 202311323567.8, filed with the China National Intellectual Property Administration on October 11, 2023 and entitled "LENS ASSEMBLY, OPTICAL SYSTEM, AND DISPLAY DEVICE", which is incorporated herein by reference in its entirety.

**TECHNICAL FIELD**

This application relates to the field of display technologies, and specifically, to a lens assembly, an optical system, and a display device.

**BACKGROUND**

In an existing virtual reality (Virtual Reality, VR) display device of a folded optical path type, to optimize image quality, a surface that is of a lens and that is used to bond an optical film usually uses an arc-shaped surface profile (for example, a spherical surface or an aspheric surface), and difficulty of a curved surface bonding technology is high. In addition, as a curvature radius of the lens decreases, performance of optical film layers such as a quarter-wave plate and a reflective polarization element is degraded. This not only causes problems such as a color shift and reduced uniformity, but also causes problems such as orange peel wrinkling, a bubble, and bonding failure of the optical film layers.

**SUMMARY**

A first aspect of this application provides a lens assembly. The lens assembly includes:

a plurality of lenses sequentially arranged from an object side to an image side, where each lens includes an object side surface and an image side surface that are disposed opposite to each other, the object side surface of each lens faces the object side, and the image side surface of each lens faces the image side;
an optical splitting element, a first quarter-wave plate, and a reflective polarization element that are sequentially arranged from the object side to the image side; and
a lens barrel, where the plurality of lenses, the optical splitting element, the first quarter-wave plate, and the reflective polarization element are all located in the lens barrel, and are all located on an optical path between the object side and the image side.

At least one of the first quarter-wave plate and the reflective polarization element is independent of the plurality of lenses and fastened to the lens barrel; or the object side surfaces and the image side surfaces of the plurality of lenses include at least one bonding surface, at least one of the first quarter-wave plate and the reflective polarization element is bonded to the bonding surface, and the bonding surface is a quadric surface whose curvature is zero in at least one direction.

In the lens assembly according to the first aspect of this application, when the first quarter-wave plate and/or the reflective polarization element are/is fastened to the lens barrel, problems such as a color shift, reduced uniformity, orange peel wrinkling, a bubble, and bonding failure of the first quarter-wave plate and/or the reflective polarization element caused by bonding using an existing curved surface bonding technology may be directly avoided. When the first quarter-wave plate and/or the reflective polarization element are/is bonded to the bonding surface, the bonding surface is a quadric surface whose curvature is zero in at least one direction. This helps reduce difficulty of bonding the first quarter-wave plate and/or the reflective polarization element to the lens by using a curved surface bonding technology, and helps resolve problems such as a color shift, reduced uniformity, orange peel wrinkling, a bubble, and bonding failure of the first quarter-wave plate and/or the reflective polarization element that occur after bonding using the curved surface bonding technology.

In some embodiments, a surface profile equation of the quadric surface whose curvature is zero in at least one direction is:

$$Z_1 = \frac{c_x x^2 + c_y y^2}{1 + \sqrt{1 - (1 + k_x) c_x x^2 - (1 + k_y) c_y y^2}}.$$

In the surface profile equation of the quadric surface whose curvature is zero in at least one direction,

$c_x = \dfrac{1}{Rx}$, $c_y = \dfrac{1}{Ry}$, Rx is a curvature radius of the bonding surface in a first direction, Ry is a curvature radius of the bonding surface in a second direction, $Z_1$ is a sagittal height of the bonding surface in a third direction, the first direction, the second direction, and the third direction are perpendicular to each other, $k_x$ and $k_y$ are conic coefficients, and one of Rx and Ry has an infinite value. One of Rx and Ry in the surface profile equation of the bonding surface has an infinite value, so that the bonding surface exhibits a curvature approaching zero in one of the first direction or the second direction, and exhibits curvature variation in the other of the first direction and the second direction. Therefore, the bonding surface not only can resolve the problems caused by the curved surface bonding technology, but also can provide some focal power for the lens assembly compared with a planar bonding surface, thereby helping improve processing and manufacturing precision of the lens.

In some embodiments, the object side surfaces and the image side surfaces of the plurality of lenses further include at least one of at least one freeform surface, a freeform surface, a spherical surface, a rotationally symmetric aspheric surface, and a Fresnel surface. The freeform surface includes at least one of an extended polynomial surface, a Zernike polynomial surface, and a Q-type polynomial surface. The freeform surface may provide more optimization variables, and therefore has the following advantages: first, helping increase a field of view of an optical system; second, helping reduce an aperture of the lens, thereby reducing a weight of the optical system; third, helping reduce distortion and increase screen utilization; and fourth, reducing a thick-thin ratio of the lens, improving a processing technology of the lens, and reducing the weight of the optical system. Specifically, the extended polynomial surface has a simple surface profile description and a high design degree of freedom, and is consistent with a form of numerical control machining of an optical surface. The Zernike polynomial surface has a direct correspondence with an aberration, thereby helping implement targeted correction of an aberration of the optical system based on a vector aberration theory. A surface profile coefficient of the Q-type polynomial surface may directly represent a sagittal height deviation gradient of the surface relative to a best-fitting spherical surface, and may be used for tolerance analysis of the freeform surface, so that optical design and evaluation of processing detection difficulty may be simultaneously performed, thereby avoiding a cumbersome process of performing processing evaluation after design. The spherical surface facilitates lens processing, and has low costs. Compared with the spherical surface, the rotationally symmetric aspheric surface facilitates correction of a spherical aberration in imaging, and improves imaging quality. Compared with the spherical surface and the rotationally symmetric aspheric surface, the Fresnel surface has a shorter focal length, a smaller size, a lighter weight, and a more compact structure.

In some embodiments, the object side surfaces and the image side surfaces of the plurality of lenses include the rotationally symmetric aspheric surface, and a surface profile equation of the rotationally symmetric aspheric surface is:

$$Z_2 = \frac{cr^2}{1 + \sqrt{1-(1+k)c^2r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}.$$

In the surface profile equation of the rotationally symmetric aspheric surface, $Z_2$ is a sagittal height of the rotationally symmetric aspheric surface, c is a curvature of the rotationally symmetric aspheric surface, k is a quadric surface coefficient of the rotationally symmetric aspheric surface, r is a semi-aperture of the lens to which the rotationally symmetric aspheric surface belongs, and $\alpha_1$, $\alpha_2$, $\alpha_3$, $\alpha_4$, $\alpha_5$, $\alpha_6$, $\alpha_7$, and $\alpha_8$ are respectively coefficients of a second-order term, a fourth-order term, a sixth-order term, a tenth-order term, a twelfth-order term, a fourteenth-order term, and a sixteenth-order term. Specifically, the surface profile equation of the aspheric surface being an even-order aspheric surface is easier to process than an odd-order aspheric surface.

In some embodiments, the first quarter-wave plate and the reflective polarization element are combined into a laminate and bonded to the bonding surface; or the first quarter-wave plate and the reflective polarization element are combined into a laminate and fastened to the lens barrel; or the first quarter-wave plate and the reflective polarization element are respectively bonded to different bonding surfaces; or the first quarter-wave plate and the reflective polarization element are spaced apart and separately fastened to the lens barrel; or one of the first quarter-wave plate and the reflective polarization element is fastened to the lens barrel, and the other is bonded to the bonding surface. Specifically, separating and bonding the plurality of optical films to different bonding surfaces may avoid a problem of wastage of an entire composite film caused by poor bonding of the composite film. Combining and bonding the plurality of optical films to a same bonding surface helps reduce a quantity of bonding times.

In some embodiments, the plurality of lenses include a first lens, a second lens, and a third lens that are sequentially arranged from the object side to the image side, the optical splitting element is located on an object side surface of the first lens, and an object side surface of the third lens is the bonding surface. In this way, the optical splitting element is disposed on an object side surface of a lens closer to the object side, and the first quarter-wave plate and the reflective polarization element are bonded to an object side surface of a lens closer to the image side, so that not only exposure of the first quarter-wave plate and the reflective polarization element to the outside may be avoided, but also optical path folding can be maximized.

In some embodiments, the reflective polarization element and the first quarter-wave plate are combined into a laminate and bonded to the object side surface of the third lens. In this way, the first quarter-wave plate and the reflective polarization element are combined and bonded to a same bonding surface, and this helps reduce a quantity of bonding times and a quantity of bonding surfaces, thereby avoiding use of too many bonding surfaces that may affect imaging quality.

In some embodiments, the lens assembly further includes a first linear polarizer, the first linear polarizer is bonded to a surface that is of the reflective polarization element and that is close to the image side, and the first linear polarizer, the reflective polarization element, and the first quarter-wave plate are combined into a laminate and bonded to the object side surface of the third lens. The first linear polarizer is disposed to eliminate stray light, thereby reducing stray light entry into a human eye, and helping a user to perceive high-definition imaging. The first linear polarizer, the reflective polarization element, and the first quarter-wave plate are combined into a laminate and bonded to a same bonding surface, and this helps reduce a quantity of bonding times and a quantity of bonding surfaces, thereby avoiding use of too many bonding surfaces that may affect imaging quality. In another embodiment, the first linear polarizer may alternatively be independent of the reflective polarization element and bonded to the bonding surface, or the first linear polarizer is independent of the reflective polarization element and fastened to the lens barrel.

In some embodiments, the lens assembly further includes an anti-reflection coating, the anti-reflection coating is bonded to a surface that is of the first quarter-wave plate and that is close to the object side, and the reflective polarization element, the first quarter-wave plate, and the anti-reflection coating are combined into a laminate and bonded to the object side surface of the third lens. The anti-reflection coating is disposed to reduce reflection of incident light, thereby improving optical efficiency of the optical system. The reflective polarization element, the first quarter-wave plate, and the anti-reflection coating are combined into a laminate and bonded to a same bonding surface, and this also helps reduce a quantity of bonding times and a quantity of bonding surfaces, thereby avoiding use of too many bonding surfaces that may affect imaging quality. In another embodiment, the anti-reflection coating is independent of the first quarter-wave plate and bonded to the bonding surface, or the anti-reflection coating is independent of the first quarter-wave plate and fastened to the lens barrel.

In some embodiments, the lens assembly further includes an anti-reflection coating and a first linear polarizer, the anti-reflection coating is bonded to a surface that is of the first quarter-wave plate and that is close to the object side, the first linear polarizer is bonded to a surface that is of the reflective polarization element and that is close to the image side, and the first linear polarizer, the reflective polarization element, the first quarter-wave plate, and the anti-reflection coating are combined into a laminate and bonded to the object side surface of the third lens. This helps reduce a quantity of bonding times and a quantity of bonding surfaces, thereby avoiding use of too many bonding surfaces that may affect imaging quality.

In some embodiments, the optical splitting element has a transmittance of 10% to 90% for light whose wavelength ranges from 380 nm to 1000 nm, and has a reflectance of 10% to 90% for the light whose wavelength ranges from 380 nm to 1000 nm; and/or the reflective polarization element has a reflectance of 75% to 100% for one of p-linearly polarized light and s-linearly polarized light in the light whose wavelength ranges from 380 nm to 1000 nm, and has a transmittance of 75% to 100% for the other of the p-linearly polarized light and the s-linearly polarized light in the light whose wavelength ranges from 380 nm to 1000 nm. However, this is not limited thereto.

In some embodiments, a center thickness of each lens ranges from 0.8 mm to 12 mm, and an edge thickness of each lens ranges from 0.8 mm to 12 mm. However, this is not limited thereto.

In some embodiments, the plurality of lenses include a convex lens and/or a concave lens; when the plurality of lenses include a convex lens, a ratio of a center thickness to an edge thickness of the convex lens is less than 7:1; and when the plurality of lenses include a concave lens, a ratio of a center thickness to an edge thickness of the concave lens is greater than 1:7. Specifically, a larger thick-thin ratio leads to more non-uniform shrinkage during lens molding and higher difficulty of forming a high-precision lens. In this embodiment of this application, a hybrid optical path with a plurality of surface profiles is used, thereby helping reduce the thick-thin ratio of the lens, improve the processing technology of the lens, and reduce the weight of the optical system.

In some embodiments, the first linear polarizer has a transmittance of 70% to 100% for one of p-linearly polarized light and s-linearly polarized light in light whose wavelength ranges from 380 nm to 1000 nm, and has an absorption rate of 70% to 100% for the other of the p-linearly polarized light and the s-linearly polarized light in the light whose wavelength ranges from 380 nm to 1000 nm. However, this is not limited thereto.

In some embodiments, a reflectance of the anti-reflection coating for light whose wavelength ranges from 380 nm to 1000 nm is less than or equal to 5%. However, this is not limited thereto. In some embodiments, image light incident on the lens assembly is linearly polarized light, and the lens assembly further includes a second quarter-wave plate located on a side that is of the optical splitting element and that is close to the object side.

In some embodiments, image light incident on the lens assembly is non-polarized light, and the lens assembly further includes a second linear polarizer located on a side that is of the second quarter-wave plate and that is away from the optical splitting element. The second linear polarizer is configured to convert the image light into linearly polarized light, and the second quarter-wave plate is configured to convert the linearly polarized light into circularly polarized light.

In some embodiments, the second linear polarizer has a transmittance of 70% to 100% for one of p-linearly polarized light and s-linearly polarized light in light whose wavelength ranges from 380 nm to 1000 nm, and has an absorption rate of 70% to 100% for the other of the p-linearly polarized light and the s-linearly polarized light in the light whose wavelength ranges from 380 nm to 1000 nm. However, this is not limited thereto.

A second aspect of this application provides an optical system. The optical system includes:

the lens assembly according to the first aspect of this application; and
a display, located on the object side of the lens assembly, where the display is configured to emit image light to the lens assembly.

The optical system according to the second aspect of this application has at least the same advantages as the lens assembly according to the first aspect, and details are not described herein again.

In some embodiments, the lens assembly of the optical system has a first symmetry axis and a second symmetry axis that are perpendicular to each other, and an intersection point of the first symmetry axis and the second symmetry axis is an optical axis center of the lens assembly; and a display area of the display is asymmetric with respect to at least one of the first symmetry axis and the second symmetry axis. Specifically, the display of the optical system may have at least one of a horizontal offset, a vertical offset, and a rotational offset relative to an optical axis of the lens assembly, so that in the optical system, the display area is asymmetric with respect to at least one of the first symmetry axis and the second symmetry axis of the lens assembly. In this way, when the foregoing optical system is applied to a display device, a part of a virtual image is imagined by a user through binocular stereoscopic vision, and this is equivalent to indirectly expanding display content of the display. Inherent resolution of two displays in the display device remains unchanged, and accordingly, this is equivalent to providing additional apparent resolution and an additional field of view, thereby helping improve angular resolution. In addition, the display content of the display is indirectly expanded, so that a color shift problem caused by large focal power provided by the optical system may be further avoided.

In some embodiments, the display area has a third symmetry axis and a fourth symmetry axis that are perpendicular to each other; the third symmetry axis can be obtained by rotating the first symmetry axis by a preset angle and/or translating the first symmetry axis by a first distance in a direction parallel to the second symmetry axis, a range of the preset angle is (-90°, 90°), a value of the preset angle is negative when the third symmetry axis is in a counterclockwise direction of the first symmetry axis, the value of the preset angle is positive when the third symmetry axis is in a clockwise direction of the first symmetry axis, a range of the first distance is [0, 0.5*L), and L is a size of the display area in the direction parallel to the second symmetry axis; and the fourth symmetry axis can be obtained by rotating the second symmetry axis by the preset angle and/or translating the second symmetry axis by a second distance in a direction parallel to the first symmetry axis, a range of the second distance is [0, 0.5*W), and W is a size of the display area in the direction parallel to the first symmetry axis. Specifically, when the preset angle, the first distance, and the second distance exceed the foregoing ranges, eyes of the user cannot obtain an image through fusion.

In some embodiments, when the lens assembly includes the second quarter-wave plate but does not include the second linear polarizer, the image light is linearly polarized light, the second quarter-wave plate is located between the optical splitting element and the display, and the second quarter-wave plate is configured to convert the image light into circularly polarized light. The second quarter-wave plate is fastened to the lens barrel, or the second quarter-wave plate is bonded to the display.

In some embodiments, when the lens assembly includes the second quarter-wave plate and the second linear polarizer, the image light is non-polarized light, both the second quarter-wave plate and the second linear polarizer are located between the optical splitting element and the display, the second linear polarizer is configured to convert the image light into linearly polarized light, and the second quarter-wave plate is configured to convert the linearly polarized light into circularly polarized light. The second quarter-wave plate and the second linear polarizer are spaced apart and separately fastened to the lens barrel; or the second quarter-wave plate and the second linear polarizer are combined into a laminate and fastened to the lens barrel; or the second quarter-wave plate is fastened to the lens barrel, and the second linear polarizer is bonded to the display; or the second quarter-wave plate and the second linear polarizer are combined into a laminate and bonded to the display.

In some embodiments, the display is any one of an organic light-emitting diode display, a liquid crystal display, a micro light-emitting diode display, a liquid crystal on silicon display, a digital light processing display, and a laser beam scanner, but is not limited thereto.

In some embodiments, a size of the display area is not greater than 7 inches, to obtain a display device that is small in size and light in weight and that can be worn for a long time.

In some embodiments, a quantity of pixels per inch of the display is not less than 400, to reduce picture graininess and improve immersion and visual definition when the user uses the display device.

In some embodiments, a refresh rate of the display is not less than 30 Hz, to improve picture fluency and a response speed of the display.

A third aspect of this application provides a display device. The display device includes:

a housing; and
a first optical system and a second optical system that are mounted on the housing.

The first optical system and the second optical system are the optical systems according to the second aspect of this application.

The display device according to the third aspect of this application has at least the same advantages as the optical system according to the second aspect of this application, and details are not described herein again.

In some embodiments, when a user wears the display device, the first optical system corresponds to a left eye of the user, the second optical system corresponds to a right eye of the user, and both the display area of the first optical system and the display area of the second optical system have the third symmetry axis and the fourth symmetry axis. In the first optical system, the third symmetry axis can be obtained by rotating the first symmetry axis counterclockwise and/or translating the first symmetry axis in a direction from a nasal bridge of the user to a forehead of the user, and the fourth symmetry axis can be obtained by rotating the second symmetry axis counterclockwise and/or translating the second symmetry axis in a direction from the right eye of the user to the left eye of the user. In the second optical system, the third symmetry axis can be obtained by rotating the first symmetry axis clockwise and/or translating the first symmetry axis in a direction from the forehead of the user to the nasal bridge of the user, and the fourth symmetry axis can be obtained by rotating the second symmetry axis clockwise and/or translating the second symmetry axis in a direction from the left eye of the user to the right eye of the user. Due to offsets of two displays in the display device, a distance between the two displays is increased, space between the two displays is larger, and the space may be used to arrange another mechanism (for example, a heat dissipation mechanism or an interpupillary distance adjustment mechanism).

**BRIEF DESCRIPTION OF DRAWINGS**

FIG. 1A is a diagram of a structure of a display device according to a first embodiment of this application;
FIG. 1B is a diagram of imaging of the display device in FIG. 1A;
FIG. 1C is a diagram of a structure of an optical system according to the first embodiment of this application;
FIG. 2 is a diagram of a structure of an optical system according to a second embodiment of this application;
FIG. 3 is a diagram of a structure of an optical system according to a third embodiment of this application;
FIG. 4 is a diagram of a structure of an optical system according to a fourth embodiment of this application;
FIG. 5 is a diagram of a structure of an optical system according to a fifth embodiment of this application;
FIG. 6 is a diagram of a structure of an optical system according to a sixth embodiment of this application;
FIG. 7 is a diagram of a structure of an optical system according to a seventh embodiment of this application;
FIG. 8 is a diagram of a structure of an optical system according to an eighth embodiment of this application;
FIG. 9 is a diagram of a structure of an optical system according to a ninth embodiment of this application;
FIG. 10 is a diagram of a structure of an optical system according to a tenth embodiment of this application;
FIG. 11 is a diagram of a structure of an optical system according to an eleventh embodiment of this application;
FIG. 12 is a diagram of imaging of a display device according to the second embodiment of this application;
FIG. 13 is a diagram of imaging of a display device according to the third embodiment of this application;
FIG. 14 is a diagram of imaging of a display device according to the fourth embodiment of this application;
FIG. 15 is a diagram of imaging of a display device according to the fifth embodiment of this application;
FIG. 16 is a diagram of a modulation transfer function of a display device according to an embodiment of this application; and
FIG. 17 is a grid distortion diagram of a display device according to an embodiment of this application.

Description of reference numerals of main elements:

| | |
|---|---|
| Display device | 1000a, 1000b, 1000c, 1000d, 1000e |
| First optical system | 100a, 100b, 100c, 100d, 100e |
| Second optical system | 200a, 200b, 200c, 200d, 200e |
| Housing | 300 |

(continued)

| Optical system | 1a, 1b, 1c, 1d, 1e, 1f, 1g, 1h, 1i, 1j, 1k |
|---|---|
| Display | 110 |
| First display | 111 |
| Second display | 112 |
| Lens assembly | 120, 120a, 120b, 120c, 120d, 120e, 120f, 120g, 120h, 120i, 120j, 120k |
| First lens assembly | 121 |
| Second lens assembly | 122 |
| Lens group | 10 |
| First lens | 11 |
| Second lens | 12 |
| Third lens | 13 |
| Optical splitting element | 20 |
| First polarization modulation assembly | 30a, 30b, 30c, 30d |
| First quarter-wave plate | 31 |
| Reflective polarization element | 32 |
| First linear polarizer | 33 |
| Anti-reflection coating | 34 |
| Second polarization modulation assembly | 40 |
| Second linear polarizer | 41 |
| Second quarter-wave plate | 42 |
| Human eye | E |
| First optical surface | S1 |
| Second optical surface | S2 |
| Third optical surface | S3 |
| Fourth optical surface | S4 |
| Fifth optical surface | S5 |
| Sixth optical surface | S6 |
| First direction | X |
| Second direction | Y |
| Third direction | Z |
| Display area | AA |
| Optical axis center | O1 |
| Geometric center | O2 |
| First symmetry axis | A1 |
| Second symmetry axis | A2 |
| Third symmetry axis | A3 |
| Fourth symmetry axis | A4 |
| First angle | $\theta1$ |
| Second angle | $\theta2$ |
| First distance | D1 |
| Second distance | D2 |
| Third distance | D3 |
| Fourth distance | D4 |
| Left visible range | VAL |
| Right visible range | VAR |
| Binocular visible range | VA1, VA2, VA3, VA4, VA5 |

## DESCRIPTION OF EMBODIMENTS

An optical system of an existing VR display device has a small field of view (Filed of View, FOV), a long total track length (Total Track Length, TTL), and a small quantity of pixels per degree (Pixels Per Degree, PPD). Particularly, when the display device uses a small-size display, as the field of view increases, image quality of an edge area is degraded, distortion is large, screen utilization is low, optical design is more difficult, and a surface profile of a lens is not conducive to processing and manufacturing. To optimize the image quality, a surface that is of the lens and that is used to bond an optical film usually uses an arc-shaped surface profile (for example, a spherical surface or an aspheric surface), and difficulty of a curved surface bonding technology is high. In addition, as a curvature radius of the lens decreases, performance of optical film layers such as a quarter-wave plate and a reflective polarization element is degraded. This not only causes problems such as a color shift and reduced uniformity, but also causes problems such as orange peel wrinkling, a bubble, and bonding failure of the optical film layers.

In view of this, embodiments of this application provide a lens assembly, an optical system, and a display device, to resolve at least one of the foregoing problems.

A first aspect of this application provides a lens assembly. The lens assembly includes a lens barrel, a plurality of lenses sequentially arranged from an object side to an image side, and an optical splitting element, a first quarter-wave plate, and a reflective polarization element that are sequentially arranged from the object side to the image side. The plurality of lenses, the optical splitting element, the first quarter-wave plate, and the reflective polarization element are all located in the lens barrel, and are all located on an optical path between the object side and the image side. Each lens includes an object side surface and an image side surface that are disposed opposite to each other, the object side surface of each lens faces the object side, and the image side surface of each lens faces the image side. At least one of the first quarter-wave plate and the reflective polarization element is independent of the plurality of lenses and fastened to the lens barrel; or the object side surfaces and the image side surfaces of the plurality of lenses include at least one bonding surface, at least one of the first quarter-wave plate and the reflective polarization element is bonded to the bonding surface, and the bonding surface is a quadric surface whose curvature is zero in at least one direction.

In the lens assembly according to the first aspect of this application, when the first quarter-wave plate and/or the reflective polarization element are/is fastened to the lens barrel, problems such as a color shift, reduced uniformity, orange peel wrinkling, a bubble, and bonding failure of the first quarter-wave plate and/or the reflective polarization element caused by bonding using an existing curved surface bonding technology may be directly avoided. When the first quarter-wave plate and/or the reflective polarization element are/is bonded to the bonding surface, the bonding surface is a quadric surface whose curvature is zero in at least one direction. This helps reduce difficulty of bonding the first quarter-wave plate and/or the reflective polarization element to the lens by using a curved surface bonding technology, and helps resolve problems such as a color shift, reduced uniformity, orange peel wrinkling, a bubble, and bonding failure of the first quarter-wave plate and/or the reflective polarization element that occur after bonding using the curved surface bonding technology.

A second aspect of this application provides an optical system. The optical system includes the lens assembly according to the first aspect of this application, and a display. The display is located on the object side of the lens assembly, and the display is configured to emit image light to the lens assembly.

The optical system according to the second aspect of this application has at least the same advantages as the lens assembly according to the first aspect, and details are not described herein again.

A third aspect of this application provides a display device. The display device includes a housing and a first optical system and a second optical system that are mounted on the housing. The first optical system and the second optical system are the optical systems according to the second aspect of this application.

The display device according to the third aspect of this application has at least the same advantages as the optical system according to the second aspect of this application, and details are not described herein again.

For ease of understanding, some technical terms in embodiments of this application are first described below.

Optical axis: is a ray that perpendicularly passes through a center of an ideal lens.

Object side: With a lens assembly as a boundary, the object side is a side on which a photographed object is located. In embodiments of this application, the photographed object is a display, and the object side is a side on which the display is located.

Image side: With a lens assembly as a boundary, the image side is a side on which an image of a photographed object is located. In embodiments of this application, the side on which the image of the photographed object is located is an observation side, that is, a side on which a human eye is located.

Object side surface: A surface that is of a lens and that faces an object side is referred to as the object side surface.

Image side surface: A surface that is of a lens and that faces an image side is referred to as the image side surface.

Bonding surface: is a surface that is of a lens and to which an optical film is bonded. The optical film may be any one or a combination of any two or more of a quarter-wave plate, a reflective polarizer, an anti-reflection coating, and a linear polarizer. In embodiments of this application, the bonding surface is a quadric surface whose curvature is zero in at least one direction. For example, the bonding surface may be a developable surface.

Developable surface: is a surface whose Gaussian curvature is zero at each point on the surface. The developable surface may be bent without stretching or compressing. In other words, the developable surface is a surface that may be obtained by transforming (including folding, bending, rolling, cutting, and/or bonding) a plane. For example, a cylindrical surface or a conical surface is a developable surface.

Spherical surface: is an optical surface that has a constant curvature from a center to an edge of a lens.

Rotationally symmetric aspheric surface: is a rotationally symmetric optical surface having a curvature that varies from a center to an edge of a lens.

Freeform surface: is an optical surface that is not constrained by axis-rotational symmetry or translational symmetry.

Total track length: is a total length from an imaging surface of an optical system to a light emitting surface of a display.

Refresh rate: is a quantity of times that display content of a display is refreshed per unit of time. Quantity of pixels per degree: is an average quantity of pixels filling each included angle of 1° in a field of view, and is also referred to as angular resolution.

Focal power: is equal to a difference between a degree of image-side light beam convergence and a degree of object-side light beam convergence, and represents a capability of deflecting a ray by an optical system. A larger absolute value of the focal power indicates a stronger capability of deflecting a ray, and a smaller absolute value of the focal power indicates a weaker capability of deflecting a ray. When the focal power is a positive number, deflecting of a ray is convergent. When the focal power is a negative number, deflecting of a ray is divergent.

Field of view: is an included angle between lines connecting edges of a part that is of an image formed in a display device and that can be observed by a human eye to a center of a pupil of the human eye, and includes a horizontal field of view, a vertical field of view, a diagonal field of view, and the like. In simple terms, the field of view is a maximum visible range of a virtual image in horizontal, vertical, and diagonal directions. A larger field of view leads to stronger immersion. In embodiments of this application, unless otherwise specified, a value range includes endpoint values.

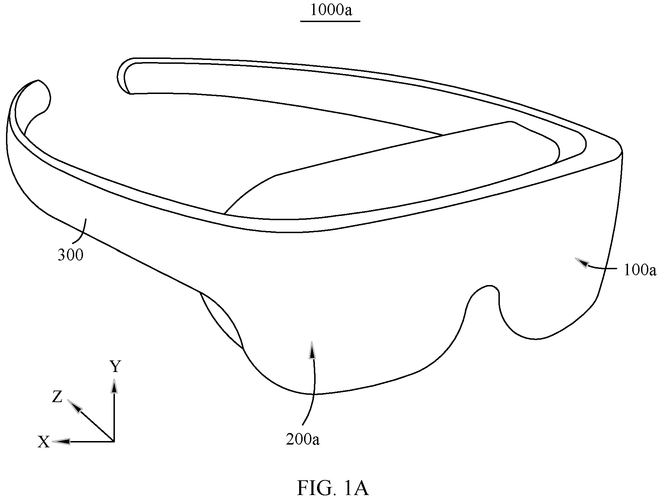

The following clearly and completely describes the technical solutions in embodiments of this application with reference to the accompanying drawings in embodiments of this application. It is clear that the described embodiments are only some but not all of embodiments of this application. As shown in FIG. 1A, a display device 1000a in a first embodiment of this application includes a first optical system 100a, a second optical system 200a, and a housing 300. Both the first optical system 100a and the second optical system 200a are mounted on the housing 300. Specifically, the housing 300 includes an accommodating cavity (not shown in the figure), and both the first optical system 100a and the second optical system 200a are accommodated in the accommodating cavity. The display device 1000a is a virtual reality display device. When a user wears the display device 1000a, the first optical system 100a corresponds to a left eye of the user, and the second optical system 200a corresponds to a right eye of the user. The user can observe a virtual image by using the display device 1000a.

It may be understood that the display device 1000a further includes other hardware such as a processor, a controller, and a battery.

The display device 1000a shown in FIG. 1A is in a form of glasses. In another embodiment, the display device 1000a may alternatively be in a form of a helmet.

For ease of description below, when the user wears the display device 1000a, a direction from the left eye of the user to the right eye of the user is defined as a positive direction of a first direction X (in other words, a direction from the first optical system 100a to the second optical system 200a is defined as the positive direction of the first direction X), a direction from a nasal bridge of the user to a forehead of the user is defined as a positive direction of a second direction Y, and a direction from the first optical system 100a and/or the second optical system 200a to the user is defined as a positive direction of a third direction Z. The first direction X, the second direction Y, and the third direction Z are perpendicular to each other. In the following, the first direction is also referred to as a horizontal direction or a left-right direction, and the second direction is also referred to as a vertical direction or an up-down direction.

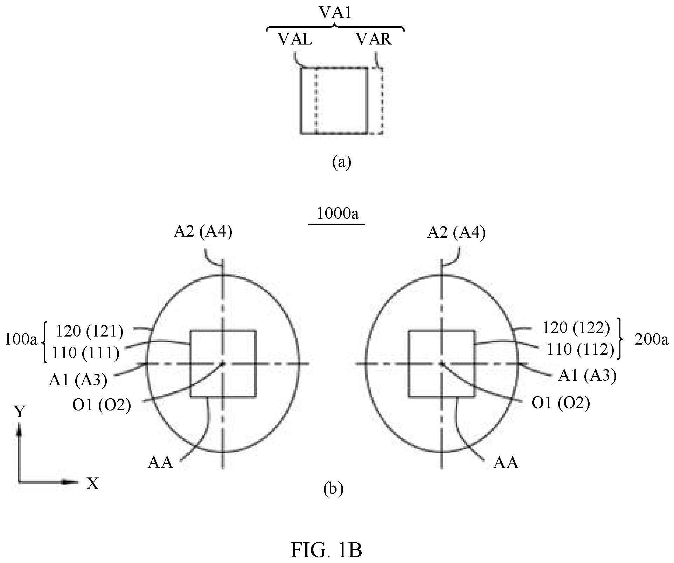

As shown in (b) in FIG. 1B, the first optical system 100a includes a display 110 and a lens assembly 120. The display 110 includes a display area AA configured to emit image light to the lens assembly 120. After passing through the lens assembly 120 of the first optical system 100a, the image light of the display 110 forms a left visible range VAL on the left eye of the user, as shown in (a) in FIG. 1B.

A structure of the second optical system 200a is the same as that of the first optical system 100a. Specifically, the second optical system 200a includes a display 110 and a lens assembly 120. The display 110 includes a display area AA configured to emit image light to the lens assembly 120. After passing through the lens assembly 120 of the second optical system 200a, the image light of the display 110 forms a right visible range VAR on the right eye of the user, as shown in (a) in FIG. 1B. A binocular visible range VA1 is obtained after superimposition of the left visible range VAL and the right visible range VAR.

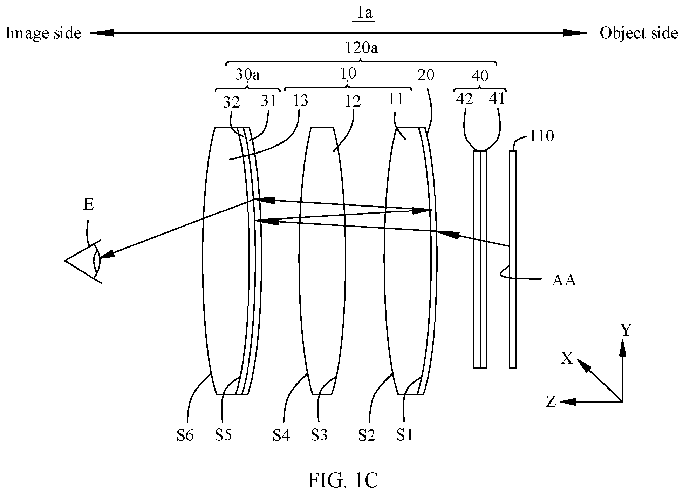

Both the first optical system 100a and the second optical system 200a are optical systems of a folded optical path type, or optical systems of a pancake (Pancake) type. The following specifically describes diagrams of structures of optical systems in different embodiments with reference to FIG. 1C to FIG. 11. The first optical system 100a and the second optical system 200a may be optical systems in any one of embodiments shown in FIG. 1C to FIG. 11 and variants of the embodiments. As shown in FIG. 1C, an optical system 1a in the first embodiment of this application includes a display 110 and a lens assembly 120a. The display 110 is located on an object side of the lens assembly 120a, and a human eye E is located on an image side of the lens assembly 120a. The display 110 is configured to emit image light to the lens assembly 120a. The lens assembly 120a is located on an optical path of the image light, and is configured to fold the optical path, to reduce a total track length of the optical system 1a.

The display 110 is any one of an organic light-emitting diode (Organic Light-Emitting Diode, OLED) display, a liquid crystal display (Liquid Crystal Display, LCD), a micro light-emitting diode (Micro Light-Emitting Diode, Micro LED) display, a liquid crystal on silicon (Liquid Crystal on Silicon, LCoS) display, a digital light processing (Digital Light Processing, DLP) display, and a laser beam scanner (Laser Beam Scanning, LBS).

In some embodiments, a size of a display area AA of the display 110 is not greater than 7 inches, to obtain a display device that is small in size and light in weight and that can be worn for a long time. In addition, a smaller size of the display area AA of the display 110 is more conducive to preparation of the display device into a form of AR glasses.

In some embodiments, a quantity of pixels per inch (Pixel Per Inch, PPI) of the display 110 is not less than 400, to reduce picture graininess and improve immersion and visual definition when the user uses the display device.

In some embodiments, a refresh rate of the display 110 is not less than 30 Hz, to improve picture fluency and a response speed of the display.

The lens assembly 120a includes a lens barrel (not shown in the figure) and a lens group 10, an optical splitting element 20, a first polarization modulation assembly 30a, and a second polarization modulation assembly 40 that are all located in the lens barrel.

The lens group 10 includes a first lens 11, a second lens 12, and a third lens 13 that are sequentially arranged from the object side to the image side. The first lens 11 includes a first optical surface S1 and a second optical surface S2 that are opposite to each other. The second lens 12 includes a third optical surface S3 and a fourth optical surface S4 that are opposite to each other. The third lens 13 includes a fifth optical surface S5 and a sixth optical surface S6 that are opposite to each other.

The first optical surface S1, the third optical surface S3, and the fifth optical surface S5 all face the object side, and the second optical surface S2, the fourth optical surface S4, and the sixth optical surface S6 all face the image side. The first optical surface S1, the third optical surface S3, and the fifth optical surface S5 are respectively object side surfaces of the first lens 11, the second lens 12, and the third lens 13, and the second optical surface S2, the fourth optical surface S4, and the sixth optical surface S6 are respectively image side surfaces of the first lens 11, the second lens 12, and the third lens 13.

The second polarization modulation assembly 40 is located between the display 110 and the optical splitting element 20, and is configured to convert the image light emitted by the display 110 into circularly polarized light. Specifically, in the optical system 1a, the image light emitted by the display 110 is non-polarized light, and the second polarization modulation assembly 40 includes a second linear polarizer 41 and a second quarter-wave plate 42 that are arranged from the object side to the image side. The second linear polarizer 41 is configured to convert the image light emitted by the display 110 into linearly polarized light, and the second quarter-wave plate 42 is configured to convert the linearly polarized light into circularly polarized light.

In some embodiments, the second linear polarizer 41 has a transmittance of 70% to 100% for one of p-linearly polarized light and s-linearly polarized light in light whose wavelength ranges from 380 nm to 1000 nm (that is, visible light to near-infrared light), and has an absorption rate of 70% to 100% for the other of the p-linearly polarized light and the s-linearly polarized light in the light whose wavelength ranges from 380 nm to 1000 nm. However, this is not limited thereto.

In another embodiment, the image light emitted by the display 110 is linearly polarized light, and the second linear polarizer 41 of the second polarization modulation assembly 40 may be omitted. That is, the second polarization modulation assembly 40 includes the second quarter-wave plate 42, but does not include the second linear polarizer 41. The second linear polarizer 41 is located between the display 110 and the optical splitting element 20, and is configured to convert the linearly polarized light emitted by the display 110 into circularly polarized light.

The optical splitting element 20 is configured to reflect a part of incident light and transmit the other part of the incident light. In some embodiments, the optical splitting element 20 has a transmittance of 10% to 90% for the light whose wavelength ranges from 380 nm to 1000 nm, and has a reflectance of 10% to 90% for the light whose wavelength ranges from 380 nm to 1000 nm. Specifically, the optical splitting element 20 may be a semi-transmission and semi-reflection film. For example, the optical splitting element 20 is disposed on the first optical surface S1 through vapor deposition, and a transmittance-to-reflectance ratio of the optical splitting element 20 for the light whose wavelength ranges from 380 nm to 1000 nm is 5:5. However, this is not limited thereto. In another embodiment, the transmittance-to-reflectance ratio of the optical splitting element 20 for the light whose wavelength ranges from 380 nm to 1000 nm may alternatively be 4:6, 3:7, or the like.

The first polarization modulation assembly 30a is located on a side that is of the optical splitting element 20 and that is away from the display 110. The first polarization modulation assembly 30a includes a first quarter-wave plate 31 and a reflective polarization element 32 that are sequentially arranged from the object side to the image side. Both the first quarter-wave plate 31 and the reflective polarization element 32 are located between the second lens 12 and the third lens 13. The first quarter-wave plate 31 has a function of making a quarter-wavelength phase difference between emergent ordinary light and extraordinary light for vertically incident light of a specific wavelength, and on an optical path, may convert linearly polarized light into circularly polarized light or elliptically polarized light, or vice versa. Specifically, the first quarter-wave plate 31 is configured to change a polarization state of incident light, so that light incident on the reflective polarization element 32 may be smoothly reflected or transmitted by the reflective polarization element 32.

The reflective polarization element 32 is configured to selectively reflect and transmit polarized light. In some embodiments, the reflective polarization element 32 is a film that reflects s-linearly polarized light and transmits p-linearly polarized light. In some other embodiments, the reflective polarization element 32 is a film that reflects p-linearly polarized light and transmits s-linearly polarized light. Specifically, the reflective polarization element has a reflectance of 75% to 100% for one of p-linearly polarized light and s-linearly polarized light in the light whose wavelength ranges from 380 nm to 1000 nm, and has a transmittance of 75% to 100% for the other of the p-linearly polarized light and the s-linearly polarized light in the light whose wavelength ranges from 380 nm to 1000 nm. However, this is not limited thereto.

In the optical system 1a in the first embodiment of this application, the fifth optical surface S5 of the third lens 13 is a bonding surface, and a surface profile equation (referred to as a formula 1) of the bonding surface is:

$$Z_1 = \frac{c_x x^2 + c_y y^2}{1 + \sqrt{1 - (1+k_x)c_x x^2 - (1+k_y)c_y y^2}}.$$

In the formula 1, $c_x = \dfrac{1}{Rx}$, $c_y = \dfrac{1}{Ry}$, Rx is a curvature radius of the bonding surface in a first direction X, Ry is a curvature radius of the bonding surface in a second direction Y, $Z_1$ is a sagittal height of the bonding surface in a third direction Z, $k_x$ and $k_y$ are conic coefficients, and one of Rx and Ry has an infinite value.

The first quarter-wave plate 31 and the reflective polarization element 32 are combined into a laminate (or a two-in-one composite film layer, or a combined entity of the first quarter-wave plate 31 and the reflective polarization element 32 that are fastened to each other) and bonded to the fifth optical surface S5.

In the optical system 1a in the first embodiment of this application, Rx is infinite, and the fifth optical surface S5 has a curvature change in the second direction Y. In this way, the fifth optical surface S5 is a quadric surface whose curvature is zero in at least one direction. Compared with bonding the first quarter-wave plate and/or the reflective polarization element to a spherical surface or a rotationally symmetric aspheric surface, bonding the first quarter-wave plate and/or the reflective polarization element to the foregoing bonding surface helps reduce difficulty of bonding the first quarter-wave plate and the reflective polarization element to the lens by using a curved surface bonding technology, and helps resolve problems such as orange peel wrinkling, a bubble, and bonding failure of the first quarter-wave plate and/or the reflective polarization element that occur after bonding using the curved surface bonding technology, thereby improving a bonding yield, and further improving imaging quality of the optical system.

In some embodiments, the object side surfaces and the image side surfaces of the plurality of lenses of the lens group 10 may further include at least one of a spherical surface, a rotationally symmetric aspheric surface, and a Fresnel surface. Specifically, the spherical surface facilitates lens processing, and has low costs. Compared with the spherical surface, the rotationally symmetric aspheric surface facilitates correction of a spherical aberration in imaging, and improves imaging quality. Compared with the spherical surface and the rotationally symmetric aspheric surface, the Fresnel surface has a shorter focal length, a smaller size, a lighter weight, and a more compact structure.

In the optical system 1a in the first embodiment of this application, the first optical surface S1, the second optical surface S12, the third optical surface S13, and the fourth optical surface S14 are all rotationally symmetric aspheric surfaces, the rotationally symmetric aspheric surface may be an even-order aspheric surface, and a surface profile equation (referred to as a formula 2) of the rotationally symmetric aspheric surface is:

$$Z_2 = \frac{cr^2}{1 + \sqrt{1 - (1+k)c^2 r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}.$$

In the formula 2, $Z_2$ is a sagittal height of the rotationally symmetric aspheric surface in the third direction Z, c is a curvature of the rotationally symmetric aspheric surface, k is a quadric surface coefficient of the rotationally symmetric aspheric surface, r is a semi-aperture of the lens to which the rotationally symmetric aspheric surface belongs, and $\alpha_1$, $\alpha_2$, $\alpha_3$, $\alpha_4$, $\alpha_5$, $\alpha_6$, $\alpha_7$, and $\alpha_8$ are respectively coefficients of a second-order term, a fourth-order term, a sixth-order term, a tenth-order term, a twelfth-order term, a fourteenth-order term, and a sixteenth-order term. The rotationally symmetric aspheric surface being an even-order aspheric surface is easier to process than an odd-order aspheric surface.

In some embodiments, the object side surfaces and the image side surfaces of the plurality of lenses of the lens group 10 include at least one freeform surface. The freeform surface includes at least one of an extended polynomial (Extended Polynomial) surface, a Zernike (Zernike) polynomial surface, and a Q-type polynomial surface. Specifically, the extended polynomial surface is obtained by adding various orders of power terms of x and y to a base of a quadric surface. The extended polynomial surface has a simple surface profile description and a high design degree of freedom, and is consistent with a form of numerical control machining of an optical surface. The Zernike polynomial surface has a direct correspondence with an aberration, thereby helping implement targeted correction of an aberration of the optical system based on a vector aberration theory. A surface profile coefficient of the Q-type polynomial surface may directly represent a sagittal height deviation gradient of the surface relative to a best-fitting spherical surface, and may be used for tolerance analysis of the freeform surface, so that optical design and evaluation of processing detection difficulty may be simultaneously performed, thereby avoiding a cumbersome process of performing processing evaluation after design.

In conclusion, compared with a conventional spherical surface and aspheric surface, the freeform surface has no rotational symmetry, has a high design degree of freedom, and can provide more design optimization variables. Therefore, the lens assembly in this embodiment of this application has at least the following advantages: first, helping correct distortion and increase screen utilization; second, helping correct an aberration, thereby optimizing a surface profile of the lens to reduce inflection of the lens, so that a thick-thin ratio suitable for a structure of the lens can be provided, and the lens has higher processing and manufacturing precision; and third, being capable of increasing a field of view and reducing the total track length when resolving the aberration.

In the optical system 1a in the first embodiment of this application, the sixth optical surface S6 of the third lens 13 is a freeform surface, the sixth optical surface S6 is an extended polynomial surface, and a surface profile equation (referred to as a formula 3) of the extended polynomial surface is:

$$Z_3 = \frac{cr^2}{1+\sqrt{1-(1+k)c^2r^2}} + \sum_{i=1}^{N} A_i E_i(x, y).$$

In the formula 3, $r^2 = x^2 + y^2$, $Z_3$ is a sagittal height of the freeform surface in the third direction Z, c is a curvature of the freeform surface, k is a quadric surface coefficient of the freeform surface, N is a total quantity of polynomial coefficients, $A_i$ is a coefficient of an $i^{th}$ extended polynomial, and $E_i(x, y)$ is power series of x and y. For example, $E_1$ is x, $E_2$ is y, $E_3$ is $x^2$, $E_4$ is x*y, $E_5$ is $y^2$, $E_6$ is $x^3$, $E_7$ is $x^2*y$, $E_8$ is $x*y^2$, $E_9$ is $y^3$, and so on. There is one monomial term, three quadratic terms, four cubic terms, and the like. Data values at positions such as x and y are divided by a normalization radius to obtain dimensionless polynomial coefficients.

In conclusion, in the foregoing optical system 1a, an optical path structure incorporating the freeform surface, the quadric surface (that is, the foregoing bonding surface), and the aspheric surface is used, and a surface profile of the bonding surface is designed to reduce difficulty of the curved surface bonding technology. The freeform surface may provide more optimization variables, and has the following advantages: first, helping increase a field of view of the optical system; second, helping reduce an aperture of the lens, thereby reducing a weight of the optical system; third, helping reduce distortion and increase screen utilization; and fourth, reducing a thick-thin ratio of the lens, improving a processing technology of the lens, and reducing the weight of the optical system.

In some embodiments, in the plurality of lenses of the lens group 10, a center thickness (Center Thickness, CT) of each lens ranges from 0.8 mm to 12 mm, and an edge thickness (Edge Thickness, ET) of each lens ranges from 0.8 mm to 12 mm. However, this is not limited thereto.

In some embodiments, the plurality of lenses of the lens group 10 include a convex lens and/or a concave lens. When the lens group 10 includes a convex lens, a ratio of a center thickness to an edge thickness of the convex lens is less than 7: 1; and when the lens group 10 includes a concave lens, a ratio of a center thickness to an edge thickness of the concave lens is greater than 1:7. However, this is not limited thereto. It should be noted that a larger thick-thin ratio leads to more non-uniform shrinkage during lens molding and higher difficulty of forming a high-precision lens. In this embodiment of this application, a hybrid optical path with a plurality of surface profiles is used, thereby helping reduce the thick-thin ratio of the lens.

A working principle of the optical system 1a is as follows: Non-polarized light emitted by the display 110 is converted into first linearly polarized light (for example, p-linearly polarized light whose vibration direction is parallel to an incident surface) after passing through the second linear polarizer 41, and the first linearly polarized light is converted into first circularly polarized light (for example, right-hand circularly polarized light) after passing through the second quarter-wave plate 42. After the first circularly polarized light passes through the optical splitting element 20, a part of the first circularly polarized light is reflected, and the other part of the first circularly polarized light is transmitted and then is converted into first linearly polarized light after sequentially passing through the first lens 11, the second lens 12, and the first quarter-wave plate 31. The reflective polarization element 32 is a film that reflects first linearly polarized light and transmits second linearly polarized light. Therefore, the first linearly polarized light obtained through conversion by the first quarter-wave plate 31 is reflected to the first quarter-wave plate 31 again after passing through the reflective polarization element 32, and is converted into first circularly polarized light after passing through the first quarter-wave plate 31. After the first circularly polarized light obtained through conversion by the first quarter-wave plate 31 passes through the second lens 12 and the first lens 11, a part of the first circularly polarized light is transmitted by the optical splitting element 20, and the other part of the first circularly polarized light is reflected by the optical splitting element 20 as second circularly polarized light (for example, left-hand circularly polarized light). After sequentially passing through the first lens 11, the second lens 12, and the first quarter-wave plate 31, the second circularly polarized light is converted into second linearly polarized light (for example, s-linearly polarized light whose vibration direction is perpendicular to the incident surface), and the second linearly polarized light is transmitted by the reflective polarization element 32 and then is incident on the human eye. In another embodiment, the first linearly polarized light may be s-linearly polarized light, the second linearly polarized light may be p-linearly polarized light, the first circularly polarized light is left-hand circularly polarized light, and the second circularly polarized light is right-hand circularly polarized light.

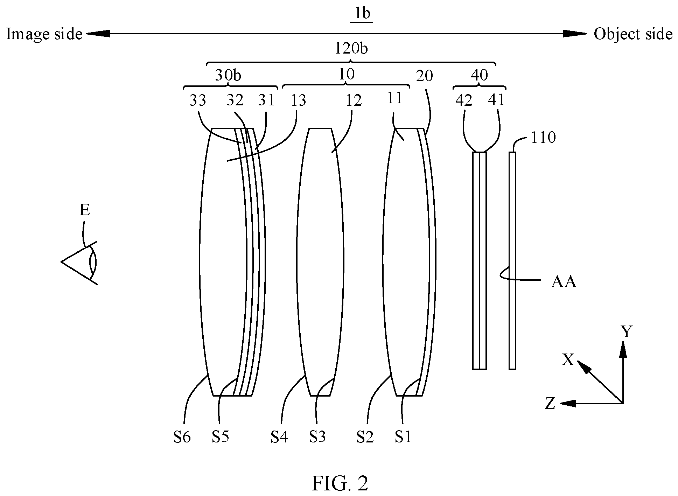

As shown in FIG. 2, a difference between an optical system 1b in a second embodiment of this application and the optical system 1a in the first embodiment lies in that a first polarization modulation assembly 30b of a lens assembly 120b further includes a first linear polarizer 33, and the first linear polarizer 33 is located on a side that is of the reflective polarization element 32 and that is close to the image side. In the optical system 1b, the first quarter-wave plate 31, the reflective polarization element 32, and the first linear polarizer 33 are sequentially arranged from the object side to the image side, form a laminate (that is, a three-in-one composite film layer), and are bonded to the fifth optical surface S5. The first linear polarizer 33 is configured to eliminate stray light, thereby reducing stray light entry into the human eye, and helping the user to perceive high-definition imaging. In some embodiments, the first linear polarizer 33 has a transmittance of 70% to 100% for one of p-linearly polarized light and s-linearly polarized light in light whose wavelength ranges from 380 nm to 1000 nm, and has an absorption rate of 70% to 100% for the other of the p-linearly polarized light and the s-linearly polarized light in the light whose wavelength ranges from 380 nm to 1000 nm. However, this is not limited thereto.

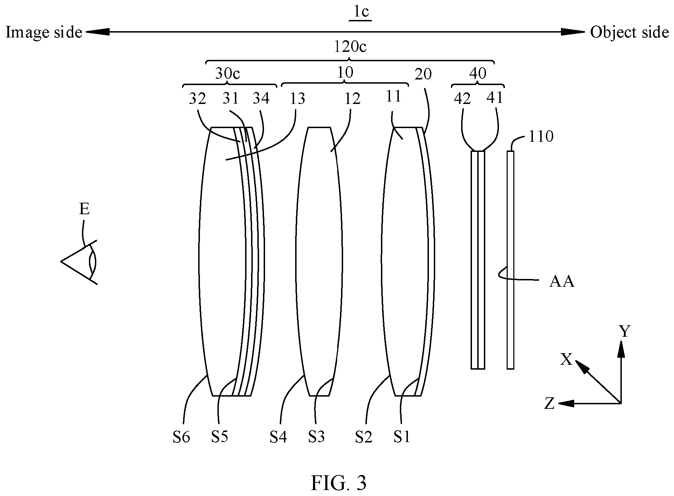

As shown in FIG. 3, a difference between an optical system 1c in a third embodiment of this application and the optical system 1a in the first embodiment lies in that a first polarization modulation assembly 30c of a lens assembly 120c further includes an anti-reflection coating 34, and the anti-reflection coating 34 is located on a side that is of the first quarter-wave plate 31 and that is close to the object side. In the optical system 1c, the anti-reflection coating 34, the first quarter-wave plate 31, and the reflective polarization element 32 are sequentially arranged from the object side to the image side, form a laminate (that is, a three-in-one composite film layer), and are bonded to the fifth optical surface S5. The anti-reflection coating 34 is configured to reduce reflection of incident light, thereby improving optical efficiency of the optical system. In some embodiments, a reflectance of the anti-reflection coating 34 for light whose wavelength ranges from 380 nm to 1000 nm is less than or equal to 5%. However, this is not limited thereto.

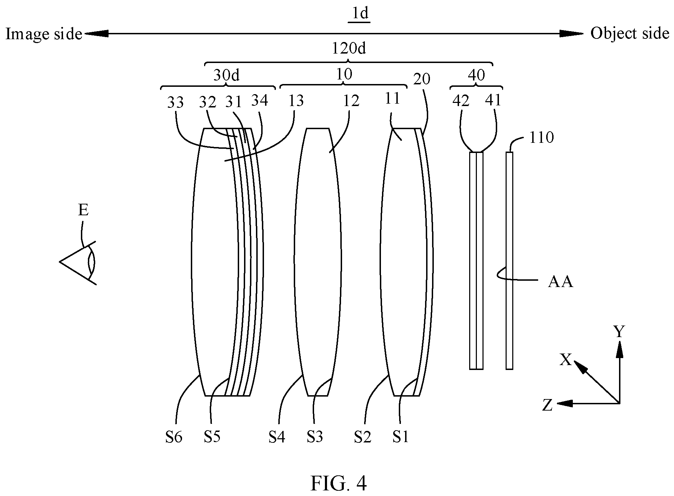

As shown in FIG. 4, a difference between an optical system 1d in a fourth embodiment of this application and the optical system 1a in the first embodiment lies in that a first polarization modulation assembly 30d of a lens assembly 120d further includes a first linear polarizer 33 and an anti-reflection coating 34, the first linear polarizer 33 is located on a side that is of the reflective polarization element 32 and that is close to the image side, and the anti-reflection coating 34 is located on a side that is of the first quarter-wave plate 31 and that is close to the object side. In the optical system 1d, the anti-reflection coating 34, the first quarter-wave plate 31, the reflective polarization element 32, and the first linear polarizer 33 are sequentially arranged from the object side to the image side, form a laminate (that is, a four-in-one composite film layer), and are bonded to the fifth optical surface S5.

In another embodiment, there may alternatively be a plurality of anti-reflection coatings disposed in the lens assembly. In addition, the anti-reflection coating may alternatively be formed on the optical surface of the lens through vapor deposition. For example, in FIG. 4, an anti-reflection coating may also be formed on the second optical surface S2 of the first lens 11 through vapor deposition, to improve utilization of light.

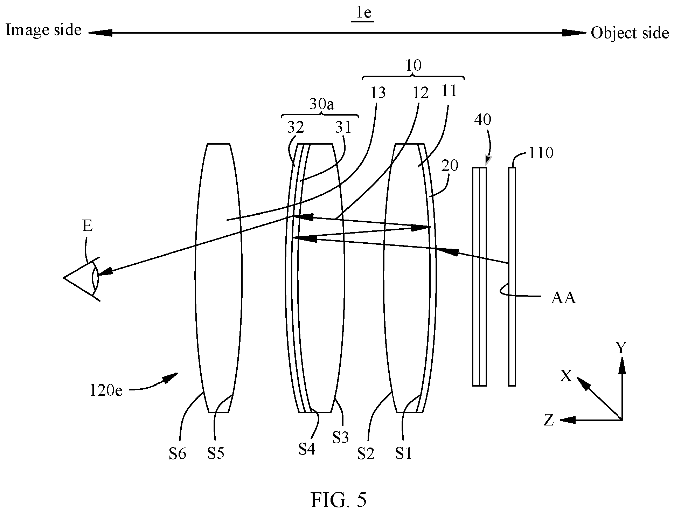

In the foregoing optical systems in the first embodiment to the fourth embodiment, the fifth optical surface S5 is the bonding surface. In another embodiment, the bonding surface may be any one of the second optical surface S2, the third optical surface S3, the fourth optical surface S4, and the sixth optical surface S6, and the first polarization modulation assembly is bonded to the bonding surface as a composite film layer. The following provides detailed descriptions with reference to FIG. 5 to FIG. 8.

As shown in FIG. 5, a difference between an optical system 1e in a fifth embodiment of this application and the optical system 1a in the first embodiment lies in that, in a lens assembly 120e, the fourth optical surface S4 is the bonding surface, and the first polarization modulation assembly 30a is bonded to the fourth optical surface S4.

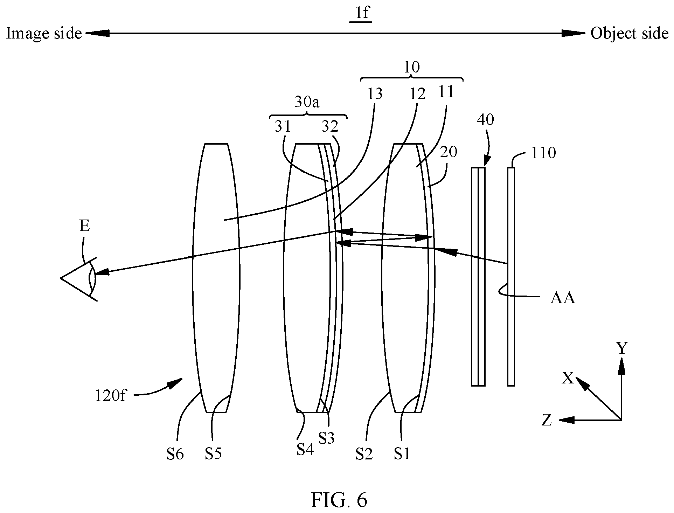

As shown in FIG. 6, a difference between an optical system 1f in a sixth embodiment of this application and the optical system 1a in the first embodiment lies in that, in a lens assembly 120f, the third optical surface S3 is the bonding surface, and the first polarization modulation assembly 30a is bonded to the third optical surface S3.

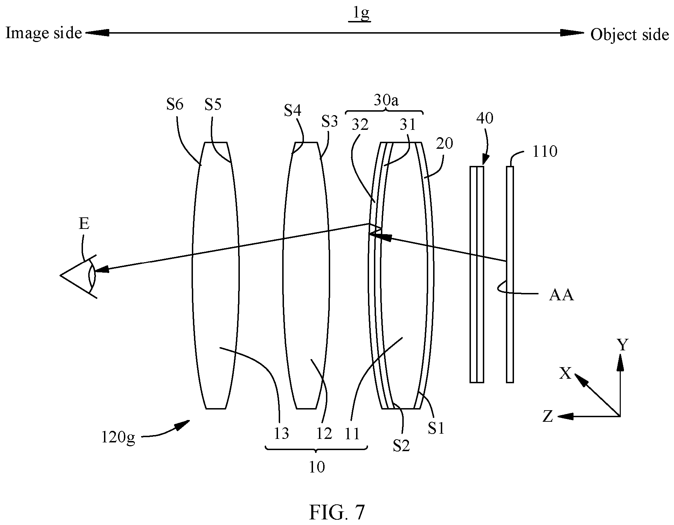

As shown in FIG. 7, a difference between an optical system 1g in a seventh embodiment of this application and the optical system 1a in the first embodiment lies in that, in a lens assembly 120g, the second optical surface S2 is the bonding surface, and the first polarization modulation assembly 30a is bonded to the second optical surface S2.

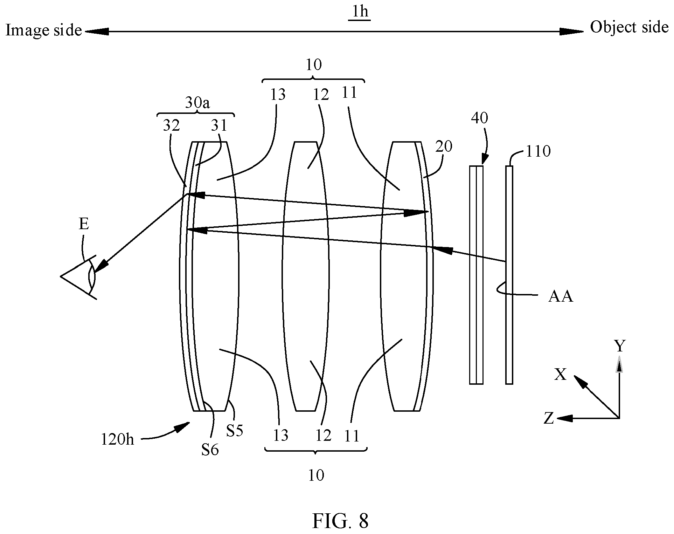

As shown in FIG. 8, a difference between an optical system 1h in an eighth embodiment of this application and the optical system 1a in the first embodiment lies in that, in a lens assembly 120h, the sixth optical surface S6 is the bonding surface, and the first polarization modulation assembly 30a is bonded to the sixth optical surface S6.

It may be learned from FIG. 1C that, in the optical system 1a, a folded optical path distance is approximately twice a distance between the optical splitting element 20 and the reflective polarization element 32. Therefore, if a distance between every two adjacent lenses in the optical system 1a, the optical system 1e, the optical system 1f, the optical system 1g, and the optical system 1h is the same, the folded optical path distance in the optical system 1a is greater than folded optical path distances in the optical system 1e, the optical system 1f, and the optical system 1g, but is less than a folded optical path distance in the optical system 1h. Therefore, the sixth optical surface S6 being the bonding surface is more conducive to maximization of optical path folding than any one of the first optical surface S1 to the fifth optical surface S5 being the bonding surface.

It should be noted that, when the sixth optical surface S6 is the bonding surface, the first polarization modulation assembly 30a is exposed to the outside, and reliability of the first polarization modulation assembly 30a is affected. Therefore, when the fifth optical surface S5 is the bonding surface, not only exposure of the first polarization modulation assembly 30a to the outside may be avoided, but also the distance between the reflective polarization element and the optical splitting element can be maximized, so that a light transmission path between the reflective polarization element and the optical splitting element is increased as much as possible, thereby maximizing optical path folding, reducing the total track length of the optical system, and achieving an excellent optical effect in the entire field of view.

It may be understood that the first polarization modulation assembly 30a in FIG. 5 to FIG. 8 may be replaced with any one of the first polarization modulation assembly 30b, the first polarization modulation assembly 30c, and the first polarization modulation assembly 30d.

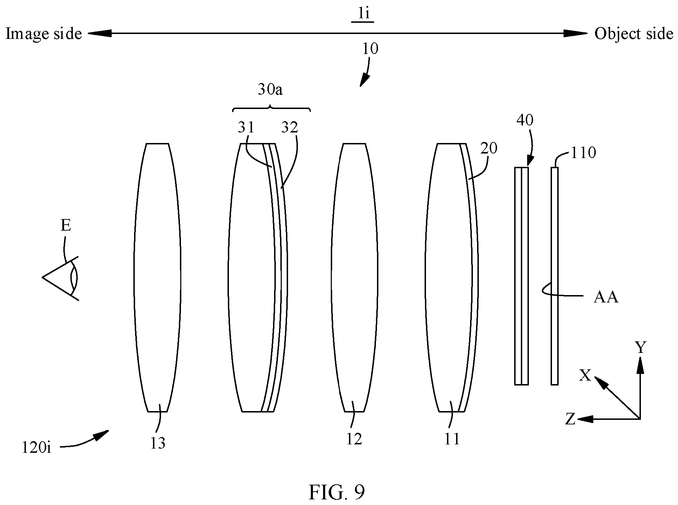

In the foregoing optical systems in the first embodiment to the eighth embodiment, an example in which there is one bonding surface in the optical system is used for description. In another embodiment, one or more optical films (for example, a first quarter-wave plate, a reflective polarizer, an anti-reflection coating, a first linear polarizer, a second linear polarizer, and a second quarter-wave plate) in the first polarization modulation assembly and the second polarization modulation assembly may alternatively be fastened to the lens barrel in an independent or combined manner. For example, a snap groove is provided on an inner wall of the lens barrel, and the foregoing one or more optical films may be snapped into the snap groove. This helps avoid problems such as orange peel wrinkling, a bubble, and bonding failure that occur when the foregoing optical film is bonded to a surface of the lens by using an existing curved surface bonding technology. In another embodiment, another mechanical structure may be disposed on the lens barrel, and the foregoing one or more optical films may be fastened to the another mechanical structure. The following provides detailed descriptions with reference to FIG. 9 to FIG. 11.

As shown in FIG. 9 and FIG. 1C, a difference between an optical system 1i in a ninth embodiment of this application and the optical system 1a in the first embodiment lies in that a lens assembly 120i does not include a bonding surface, the first polarization modulation assembly 30a is located between the second lens 12 and the third lens 13, and the first quarter-wave plate 31 and the reflective polarization element 32 in the first polarization modulation assembly 30a are combined into a laminate (or a two-in-one composite film layer) and fastened to the lens barrel.

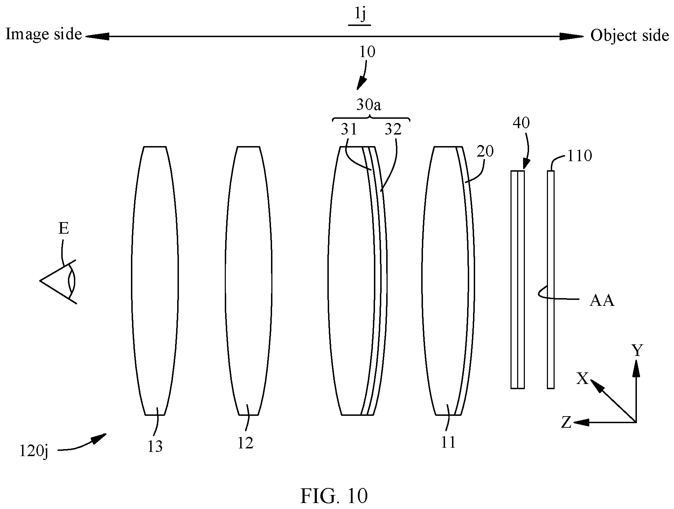

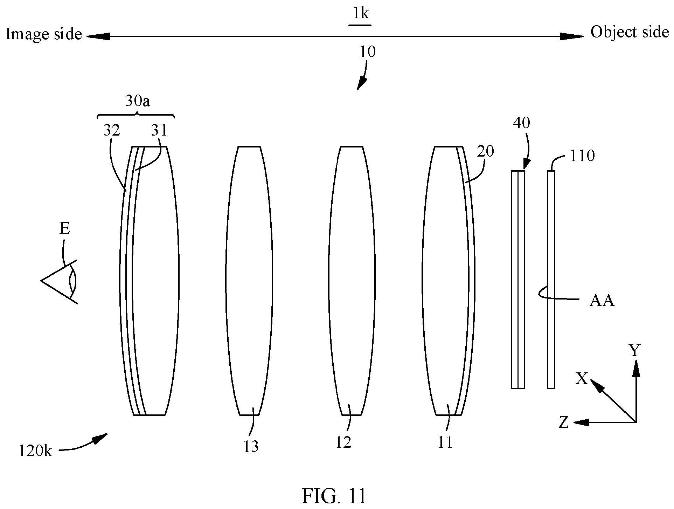

As shown in FIG. 10 and FIG. 6, a difference between an optical system 1j in a tenth embodiment of this application and the optical system 1f in the sixth embodiment of this application lies in that a lens assembly 120j does not include a bonding surface, the first polarization modulation assembly 30a is located between the first lens 11 and the second lens 12, and the first quarter-wave plate 31 and the reflective polarization element 32 in the first polarization modulation assembly 30a are combined into a laminate (or a two-in-one composite film layer) and fastened to the lens barrel. As shown in FIG. 11 and FIG. 8, a difference between an optical system 1k in an eleventh embodiment of this application and the optical system 1h in the eighth embodiment of this application lies in that a lens assembly 120k does not include a bonding surface, the first polarization modulation assembly 30a is located on a side that is of the third lens 13 and that is close to the image side, and the first quarter-wave plate 31 and the reflective polarization element 32 in the first polarization modulation assembly 30a are combined into a laminate (or a two-in-one composite film layer) and fastened to the lens barrel.

It may be understood that the first polarization modulation assembly 30a in FIG. 9 to FIG. 11 may be replaced with any one of the first polarization modulation assembly 30b, the first polarization modulation assembly 30c, and the first polarization modulation assembly 30d.

In the foregoing optical systems in the first embodiment to the eleventh embodiment and optical systems in variants of the embodiments, the first polarization modulation assembly is integrated as a two-in-one, three-in-one, or four-in-one composite film layer, and is either bonded to a same bonding surface of a lens or fastened to a same position of the lens barrel. In another embodiment, positions of the plurality of optical films in the first polarization modulation assembly are not limited to the foregoing. The following uses the first polarization modulation assembly 30a as an example for description.

In some embodiments, the lens group includes two bonding surfaces. In the first polarization modulation assembly 30a, the first quarter-wave plate 31 and the reflective polarization element 32 are respectively bonded to different bonding surfaces. The different bonding surfaces may be selected two of the second optical surface S2, the third optical surface S3, the fourth optical surface S4, the fifth optical surface S5, and the sixth optical surface S6.

In some other embodiments, in the first polarization modulation assembly 30a, the first quarter-wave plate 31 and the reflective polarization element 32 are spaced apart and separately fastened to the lens barrel. Both the first quarter-wave plate 31 and the reflective polarization element 32 may be located between the second lens 12 and the third lens 13. Alternatively, both the first quarter-wave plate 31 and the reflective polarization element 32 are located between the first lens 11 and the second lens 12. Alternatively, both the first quarter-wave plate 31 and the reflective polarization element 32 are located on the side that is of the third lens 13 and that is close to the image side. Alternatively, the first quarter-wave plate 31 and the reflective polarization element 32 are respectively located at the following different positions: between the second lens 12 and the third lens 13, between the first lens 11 and the second lens 12, and on the side that is of the third lens 13 and that is close to the image side.

In still other embodiments, in the first polarization modulation assembly 30a, one of the first quarter-wave plate 31 and the reflective polarization element 32 is fastened to the lens barrel, and the other is bonded to the bonding surface. For example, both the first quarter-wave plate 31 and the reflective polarization element 32 are located between the second lens 12 and the third lens 13, the first quarter-wave plate 31 is bonded to the fourth optical surface S4, and the reflective polarization element 32 is fastened to the lens barrel. Alternatively, the first quarter-wave plate 31 is fastened to the lens barrel, and the reflective polarization element 32 is bonded to the fifth optical surface S5. For another example, both the first quarter-wave plate 31 and the reflective polarization element 32 are located between the first lens 11 and the second lens 12, the first quarter-wave plate 31 is bonded to the second optical surface S2, and the reflective polarization element 32 is fastened to the lens barrel. Alternatively, the first quarter-wave plate 31 is fastened to the lens barrel, and the reflective polarization element 32 is bonded to the third optical surface S3. For still another example, both the first quarter-wave plate 31 and the reflective polarization element 32 are located on the side that is of the third lens 13 and that is close to the image side, the first quarter-wave plate 31 is bonded to the sixth optical surface S6, and the reflective polarization element 32 is fastened to the lens barrel. For still another example, the first quarter-wave plate 31 and the reflective polarization element 32 are respectively located at the following different positions: between the second lens 12 and the third lens 13, between the first lens 11 and the second lens 12, and on the side that is of the third lens 13 and that is close to the image side.

It may be understood that, when the first polarization modulation assembly includes three optical films, the three optical films may also be separated. For example, the three optical films are separated into three independent optical films, and each optical film may be independently bonded to one bonding surface, or may be independently fastened to the lens barrel. Alternatively, the three optical films are separated into one independent optical film and one two-in-one composite film layer. The independent optical film and the two-in-one composite film layer may be bonded to different bonding surfaces or fastened to different positions of the lens barrel, or one is bonded to a bonding surface, and the other is fastened to the lens barrel.

Specifically, in the first polarization modulation assembly 30b, a two-in-one composite film layer may be the first quarter-wave plate 31 and the reflective polarization element 32, or may be the reflective polarization element 32 and the first linear polarizer 33. In the first polarization modulation assembly 30c, a two-in-one composite film layer may be the first quarter-wave plate 31 and the reflective polarization element 32, or may be the first quarter-wave plate 31 and the anti-reflection coating 34.

It may be understood that, when the first polarization modulation assembly includes four optical films, the four optical films may also be separated. For example, the three optical films are separated into four independent optical films, and each optical film may be independently bonded to one bonding surface, or may be independently fastened to the lens barrel. Alternatively, the four optical films are separated into one independent optical film and one three-in-one composite film layer. The independent optical film and the three-in-one composite film layer may be bonded to different bonding surfaces or fastened to different positions of the lens barrel, or one is bonded to a bonding surface, and the other is fastened to the lens barrel. Alternatively, the four optical films are separated into two two-in-one composite film layers. The two two-in-one composite film layers may be bonded to different bonding surfaces or fastened to different positions of the lens barrel, or one is bonded to a bonding surface, and the other is fastened to the lens barrel.

Specifically, in the first polarization modulation assembly 30d, a three-in-one composite film layer may be the first linear polarizer 33, the reflective polarization element 32, and the first quarter-wave plate 31, or may be the reflective polarization element 32, the first quarter-wave plate 31, and the anti-reflection coating 34. In the first polarization modulation assembly 30d, two two-in-one composite film layers are respectively a laminate of the first linear polarizer 33 and the reflective polarization element 32, and a laminate of the first quarter-wave plate 31 and the anti-reflection coating 34.

It may be understood that separating and bonding the plurality of optical films in the first polarization modulation assembly to different bonding surfaces may avoid a problem of wastage of an entire composite film caused by poor bonding of the composite film. Combining and bonding the plurality of optical films in the first polarization modulation assembly to a same bonding surface helps reduce a quantity of bonding times.

In the foregoing optical systems in the first embodiment to the eleventh embodiment and optical systems in variants of the embodiments, in the second polarization modulation assembly 40, the second linear polarizer 41 and the second quarter-wave plate 42 may be combined into a laminate (or a two-in-one composite film layer) and fastened to the lens barrel or bonded to a surface that is of the optical splitting element 20 and that is close to the object side. Alternatively, the second linear polarizer 41 and the second quarter-wave plate 42 are separately fastened to the lens barrel. In some other embodiments, the lens assembly includes the second quarter-wave plate 42 but does not include the second linear polarizer 41, the second quarter-wave plate 42 is fastened to the lens barrel, and the second linear polarizer 41 is bonded to the display 110. In still other embodiments, the lens assembly does not include the second polarization modulation assembly 40, and the second polarization modulation assembly 40 is bonded to a side that is of the display 110 and on which image light is emitted. In yet other embodiments, the second linear polarizer 41 in the second polarization modulation assembly 40 of the lens assembly may be omitted, and the second quarter-wave plate 42 is fastened to the lens barrel, or bonded to the surface that is of the optical splitting element 20 and that is close to the object side, or bonded to the side that is of the display 110 and on which image light is emitted.

It should be noted that, to resolve a problem caused by a curved surface bonding technology, although a quantity of bonding surfaces in the lens group may be greater than one, considering that the imaging quality of the optical system is affected when the quantity of bonding surfaces increases, the quantity of bonding surfaces cannot be too large. That is, considering the imaging quality, the second polarization modulation assembly is either bonded to the display or fastened to the lens barrel, and is preferably not bonded to the first lens.

An example in which the lens group includes three lenses is used for description above. In another embodiment, a quantity of lenses in the lens group may be greater than three. For example, the lens group may alternatively include four lenses or five lenses.

It may be understood that, when the quantity of lenses in the lens group is greater than three, the optical splitting element is disposed on an object side surface of a lens closest to the object side, and the first polarization modulation assembly is bonded to an object side surface of a lens closest to the image side, so that not only exposure of the first polarization modulation assembly to the outside may be avoided, but also optical path folding can be maximized.

It should be noted that, with development of an OLED on silicon display, an increasing quantity of display devices use the OLED on silicon display. However, because a price of the OLED on silicon display is high, a size of the OLED on silicon display is generally relatively small, and is generally less than a diameter of an optical engine (that is, the foregoing lens assembly). If a display center of the display is aligned with an optical axis of the lens assembly, a field of view that is finally displayed is limited by a chief ray angle (Chief Ray Angle, CRA) of the display. Because an optical system of a display device is an ultra-short-focus system, when focal power is relatively large, a chief ray angle may be large, resulting in a serious color shift, and the color shift is usually uncorrectable by software.

In view of this, to improve the field of view of the display device, especially the field of view of the display device using the OLED on silicon display, in some embodiments of this application, the display of the first optical system and/or the second optical system may have at least one of a horizontal offset, a vertical offset, and a rotational offset relative to an optical axis of the lens assembly of the first optical system and/or the second optical system, so that in the first optical system and/or the second optical system, the display area is asymmetric with respect to at least one of a first symmetry axis and a second symmetry axis of the lens assembly. In this way, when the foregoing optical system is applied to the display device, a part of a virtual image is imagined by the user through binocular stereoscopic vision, and this is equivalent to indirectly expanding display content of the display. Inherent resolution of the two displays in the display device remains unchanged, and accordingly, this is equivalent to providing additional apparent resolution and an additional field of view, thereby helping improve angular resolution. In addition, in this embodiment of this application, the display content of the display is indirectly expanded, so that a color shift problem caused by large focal power provided by the optical system may be further avoided. Further, due to offsets of the two displays in the display device, a distance between the two displays is increased, space between the two displays is larger, and the space may be used to arrange another mechanism (for example, a heat dissipation mechanism or an interpupillary distance adjustment mechanism). The following provides detailed descriptions with reference to FIG. 1B and FIG. 12 to FIG. 15.

For ease of description below, the display of the first optical system and the display of the second optical system are also respectively referred to as a first display and a second display, and the lens assembly of the first optical system and the lens assembly of the second optical system are also respectively referred to as a first lens assembly and a second lens assembly.

Refer to FIG. 1B again. In the display device 1000a in the first embodiment of this application, in the first optical system 100a, a first lens assembly 121 has a first symmetry axis A1 parallel to the first direction X and a second symmetry axis A2 parallel to the second direction Y, an intersection point of the first symmetry axis A1 and the second symmetry axis A2 is an optical axis center O1 of the first lens assembly 121, and a display area AA of a first display 111 is symmetric separately with respect to the first symmetry axis A1 of the first lens assembly 121 and the second symmetry axis A2 of the first lens assembly 121.

Specifically, in the first optical system 100a, the display area AA of the first display 111 is rectangular and has a third symmetry axis A3 and a fourth symmetry axis A4 that are perpendicular to each other, and an intersection point of the third symmetry axis A3 and the fourth symmetry axis A4 is a geometric center O2 of the display area AA of the first display 111. The third symmetry axis A3 of the first display 111 is parallel to the first direction X, the fourth symmetry axis A4 of the first display 111 is parallel to the second direction Y, and a projection of the geometric center O2 of the first display 111 coincides with a projection of the optical axis center O1 of the first lens assembly 121 in the third direction Z (in other words, the geometric center O2 of the first display 111 is aligned with the optical axis of the first lens assembly 121 in the third direction Z).

The structure of the second optical system 200a is the same as that of the first optical system 100a.

That is, a display area AA of a second display 112 is rectangular, and is symmetric separately with respect to a first symmetry axis A1 and a second symmetry axis A2 of a second lens assembly 122. A third symmetry axis A3 of the display area AA of the second display 112 is parallel to the first direction X, a fourth symmetry axis A4 of the second display 112 is parallel to the second direction Y, and a projection of a geometric center O2 of the second display 112 coincides with a projection of an optical axis center O1 of the second lens assembly 122 in the third direction Z (in other words, the geometric center O2 of the second display 112 is aligned with the optical axis of the second lens assembly 122 in the third direction Z). In another embodiment, the display areas of the first display and the second display are not limited to rectangles, and for example, may alternatively be circles or rounded rectangles.

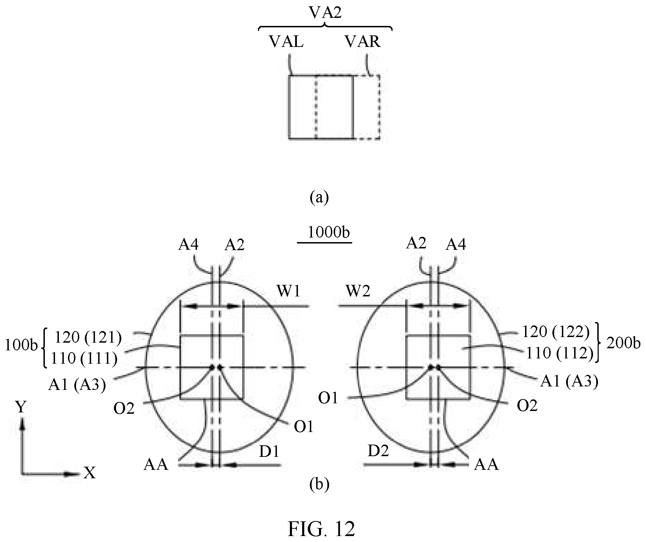

As shown in (b) in FIG. 12 and (b) in FIG. 1B, a difference between a display device 1000b in the second embodiment of this application and the display device 1000a in the first embodiment lies in that, in a first optical system 100b of the display device 1000b, the display area AA of the first display 111 is symmetric with respect to the first symmetry axis A1 of the first lens assembly 121, and is asymmetric with respect to the second symmetry axis A2 of the first lens assembly 121; and in a second optical system 200b of the display device 1000b, the display area AA of the second display 112 is symmetric with respect to the first symmetry axis A1 of the second lens assembly 122, and is asymmetric with respect to the second symmetry axis A2 of the second lens assembly 122.

Specifically, in the first optical system 100b corresponding to the left eye of the user, the geometric center O2 of the first display 111 has a leftward offset of a first distance D1 relative to the optical axis center O1 of the first lens assembly 121; and in the second optical system 200b corresponding to the right eye of the user, the geometric center O2 of the second display 112 has a rightward offset of a second distance D2 relative to the optical axis center O1 of the second lens assembly 122. That is, in the first optical system 100b, the fourth symmetry axis A4 of the display area AA of the first display 111 can be obtained by translating the second symmetry axis A2 of the first lens assembly 121 by the first distance D1 in a negative direction of the first direction X; and in the second optical system 200b, the fourth symmetry axis A4 of the display area AA of the second display 112 can be obtained by translating the second symmetry axis A2 of the second lens assembly 122 by the second distance D2 in a positive direction of the first direction X.

A range of the first distance D1 is (0, 0.5*W1), and a range of the second distance D2 is (0, 0.5*W2). W1 is a size of the display area AA of the first display 111 in the first direction X, and W2 is a size of the display area AA of the second display 112 in the first direction X. When the first distance D1 is greater than or equal to 0.5*W1 and/or the second distance D2 is greater than or equal to 0.5*W2, the eyes of the user cannot obtain an image through fusion. In some embodiments, W1 is equal to W2. However, this is not limited thereto.

After passing through the lens assembly 120 of the first optical system 100b, image light of the display 110 of the first optical system 100b forms a left visible range VAL on the left eye of the user, as shown in (a) in FIG. 12. After passing through the lens assembly 120 of the second optical system 200b, image light of the display 110 of the second optical system 200b forms a right visible range VAR on the right eye of the user, as shown in (a) in FIG. 12. A binocular visible range VA2 is obtained after superimposition of the left visible range VAL and the right visible range VAR. In the first optical system 100b, the entire display area AA of the first display 111 has an offset of the first distance D1 in the negative direction of the first direction X relative to the optical axis center O1 of the first lens assembly 121. Therefore, compared with the display device 1000a in FIG. 1B, in the display device 1000b, the left visible range VAL is entirely shifted leftward by the first distance D1. Similarly, in the second optical system 200b, the entire display area AA of the second display 112 has an offset of the second distance D2 in the positive direction of the first direction X relative to the optical axis center O1 of the second lens assembly 122. Therefore, compared with the display device 1000a in FIG. 1B, in the display device 1000b, the right visible range VAR is entirely shifted rightward by the second distance D2. This is equivalent to that the binocular visible range VA2 of the display device 1000b is expanded in the first direction X by a sum of the first distance D1 and the second distance D2, thereby improving a horizontal field of view and the binocular visible range of the display device 1000b.

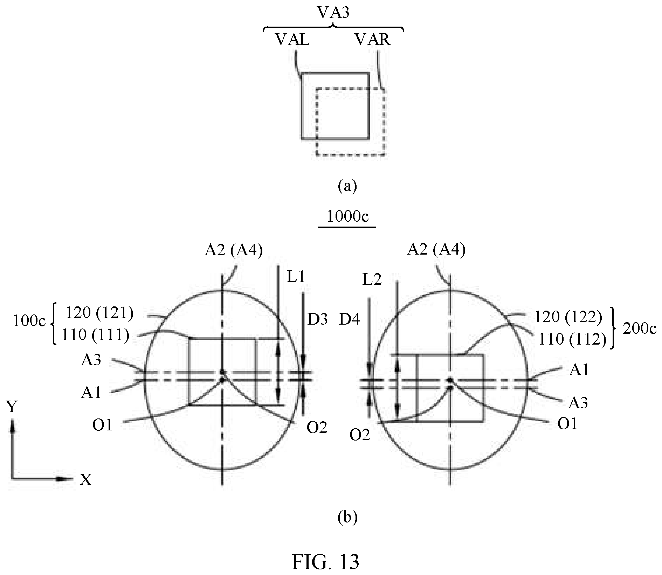

As shown in (b) in FIG. 13 and (b) in FIG. 1B, a difference between a display device 1000c in the third embodiment of this application and the display device 1000a in the first embodiment lies in that, in a first optical system 100c of the display device 1000c, the display area AA of the first display 111 is asymmetric with respect to the first symmetry axis A1 of the first lens assembly 121, and is symmetric with respect to the second symmetry axis A2 of the first lens assembly 121; and in a second optical system 200b of the display device 1000c, the display area AA of the second display 112 is asymmetric with respect to the first symmetry axis A1 of the second lens assembly 122, and is symmetric with respect to the second symmetry axis A2 of the second lens assembly 122.

Specifically, in the first optical system 100c corresponding to the left eye of the user, the geometric center O2 of the display area AA of the first display 111 has an upward offset of a third distance D3 relative to the optical axis center O1 of the first lens assembly 121; and in the second optical system 200c corresponding to the right eye of the user, the geometric center O2 of the display area AA of the second display 112 has a downward offset of a fourth distance D4 relative to the optical axis center O1 of the second lens assembly 122.

That is, in the first optical system 100c, the third symmetry axis A3 of the display area AA of the first display 111 can be obtained by translating the first symmetry axis A1 of the first lens assembly 121 by the third distance D3 in a positive direction of the second direction Y. In the second optical system 200c, the third symmetry axis A3 of the display area AA of the second display 112 can be obtained by translating the first symmetry axis A1 of the second lens assembly 122 by the fourth distance D4 in a negative direction of the second direction Y.

Specifically, a range of the third distance D3 is (0, 0.5*L1), and a range of the fourth distance D4 is (0, 0.5*L2). L1 is a size of the display area AA of the first display 111 in the second direction Y, and L2 is a size of the display area AA of the second display 112 in the second direction Y. When the third distance D3 is greater than or equal to 0.5*L1 and the fourth distance D4 is greater than or equal to 0.5*L2, the eyes of the user cannot obtain an image through fusion. In some embodiments, L1 is equal to L2. However, this is not limited thereto.

After passing through the lens assembly 120 of the first optical system 100c, image light of the display 110 of the first optical system 100c forms a left visible range VAL on the left eye of the user, as shown in (a) in FIG. 13. After passing through the lens assembly 120 of the second optical system 200c, image light of the display 110 of the second optical system 200c forms a right visible range VAR on the right eye of the user, as shown in (a) in FIG. 13. A binocular visible range VA3 is obtained after superimposition of the left visible range VAL and the right visible range VAR. In the first optical system 100c, the entire display area AA of the first display 111 has an offset of the third distance D3 in the positive direction of the second direction Y relative to the optical axis center O1 of the first lens assembly 121. Therefore, compared with the display device 1000a in FIG. 1B, in the display device 1000c, the left visible range VAL is entirely shifted upward by the third distance D3. Similarly, in the second optical system 200c, the entire display area AA of the second display 112 has an offset of the fourth distance D4 in the negative direction of the second direction Y relative to the optical axis center O1 of the second lens assembly 122. Therefore, compared with the display device 1000a in FIG. 1B, in the display device 1000c, the right visible range VAR is entirely shifted downward by the fourth distance D4. This is equivalent to that the binocular visible range VA2 of the display device 1000c is expanded in the second direction Y by a sum of the third distance D3 and the fourth distance D4, thereby improving a vertical field of view and the binocular visible range of the display device 1000c.

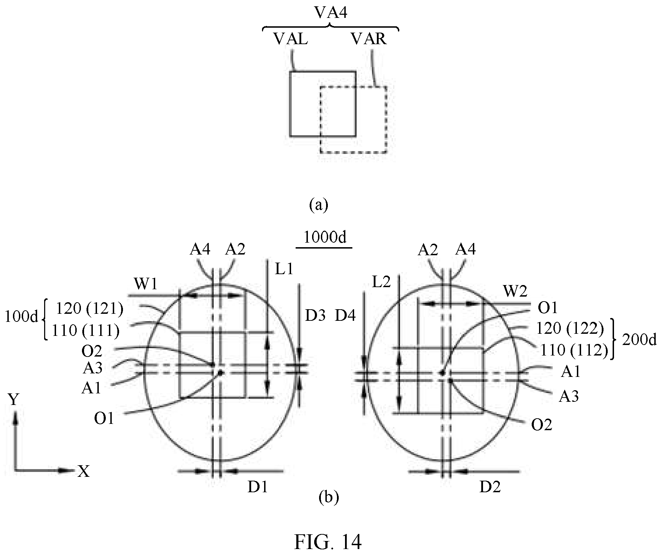

As shown in (b) in FIG. 14 and (b) in FIG. 1B, a difference between a display device 1000d in the fourth embodiment of this application and the display device 1000a in the first embodiment lies in that, in a first optical system 100d of the display device 1000d, the display area AA of the first display 111 is asymmetric with respect to both the first symmetry axis A1 and the second symmetry axis A2 of the first lens assembly 121; and in a second optical system 200d of the display device 1000d, the display area AA of the second display 112 is asymmetric with respect to both the first symmetry axis A1 and the second symmetry axis A2 of the second lens assembly 122. Specifically, in the first optical system 100d corresponding to the left eye of the user, the geometric center O2 of the first display 111 has a leftward offset of a first distance D1 and an upward offset of a third distance D3 relative to the optical axis center O1 of the first lens assembly 121; and in the second optical system 200d corresponding to the right eye of the user, the geometric center O2 of the display area AA of the second display 112 has a rightward offset of a second distance D2 and a downward offset of a fourth distance D4 relative to the optical axis center O1 of the second lens assembly 122.

That is, in the first optical system 100d, the fourth symmetry axis A4 of the display area AA of the first display 111 can be obtained by translating the second symmetry axis A2 of the first lens assembly 121 by the first distance D1 in a negative direction of the first direction X, and the third symmetry axis A3 of the display area AA of the first display 111 can be obtained by translating the first symmetry axis A1 of the first lens assembly 121 by the third distance D3 in a positive direction of the second direction Y; and in the second optical system 200d, the fourth symmetry axis A4 of the display area AA of the second display 112 can be obtained by translating the second symmetry axis A2 of the second lens assembly 122 by the second distance D2 in a positive direction of the first direction X, and the geometric center O2 of the display area AA of the second display 112 has a downward offset of a fourth distance D4 relative to the optical axis center O1 of the second lens assembly 122.

Specifically, a range of the first distance D1 is (0, 0.5W1), a range of the second distance D2 is (0, 0.5W2), a range of the third distance D3 is (0, 0.5*L1), and a range of the fourth distance D4 is (0, 0.5*L2). When the first distance D1 is greater than or equal to 0.5*W1, the second distance D2 is greater than or equal to 0.5*W2, the third distance D3 is greater than or equal to 0.5*L1, and/or the fourth distance D4 is greater than or equal to 0.5*L2, the eyes of the user cannot obtain an image through fusion. In some embodiments, L1 is equal to L2, and W1 is equal to W2. However, this is not limited thereto.

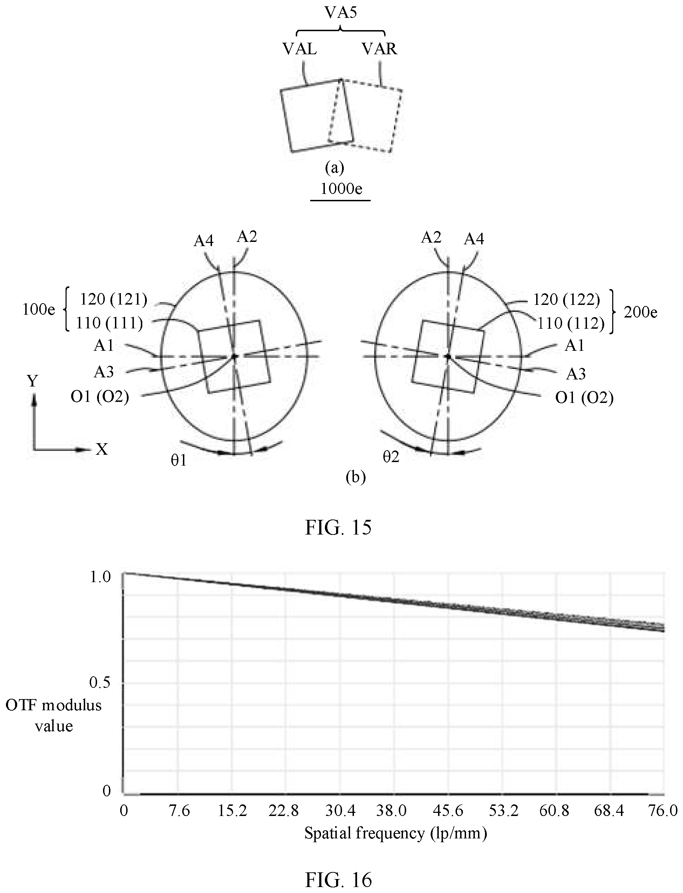

After passing through the lens assembly 120 of the first optical system 100d, image light of the display 110 of the first optical system 100d forms a left visible range VAL on the left eye of the user, as shown in (a) in FIG. 14. After passing through the lens assembly 120 of the second optical system 200d, image light of the display 110 of the second optical system 200d forms a right visible range VAR on the right eye of the user, as shown in (a) in FIG. 14. A binocular visible range VA4 is obtained after superimposition of the left visible range VAL and the right visible range VAR. Similarly, compared with the display device 1000a shown in (b) in FIG. 1B, in the display device 1000d, the left visible range VAL is entirely shifted leftward by the first distance D1 and shifted upward by the third distance D3. Similarly, compared with the display device 1000a in FIG. 1B, in the display device 1000d, the right visible range VAR is entirely shifted rightward by the second distance D2 and shifted downward by the fourth distance D4. This is equivalent to that the binocular visible range VA2 of the display device 1000d is expanded in the first direction X by a sum of the first distance D1 and the second distance D2, and is expanded in the second direction Y by a sum of the third distance D3 and the fourth distance D4, thereby improving a horizontal field of view, a vertical field of view, and the binocular visible range of the display device 1000d. As shown in (b) in FIG. 15, in a first optical system 100e of a display device 1000e, the display area AA of the first display 111 is asymmetric with respect to both the first symmetry axis A1 and the second symmetry axis A2 of the first lens assembly 121; and in a second optical system 200e of the display device 1000e, the display area AA of the second display 112 is asymmetric with respect to both the first symmetry axis A1 and the second symmetry axis A2 of the second lens assembly 122.

Specifically, in the first optical system 100e corresponding to the left eye of the user, the third symmetry axis A3 of the first display 111 can be obtained by rotating the first symmetry axis A1 of the first lens assembly 121 counterclockwise by a preset angle (that is, a first angle $\theta 1$), and the fourth symmetry axis A4 of the first display 111 can be obtained by rotating the second symmetry axis A2 of the first lens assembly 121 counterclockwise by the preset angle (that is, the first angle $\theta 1$). In the second optical system 200e corresponding to the right eye of the user, the geometric center O2 of the display area AA of the second display 112 can be obtained by rotating the first symmetry axis A1 of the second lens assembly 122 clockwise by a preset angle (that is, a second angle $\theta 2$), and the fourth symmetry axis A4 of the second display 112 can be obtained by rotating the second symmetry axis A2 of the second lens assembly 122 clockwise by the preset angle (that is, the second angle $\theta 2$).

A value range of the first angle $\theta 1$ is (-90°, 0), that is, in the first optical system 100e, the third symmetry axis A3 is in a counterclockwise direction of the first symmetry axis A1, and a rotation angle is not greater than 90°. A value range of the second angle $\theta 2$ is (0, 90°), that is, in the second optical system 200e, the third symmetry axis A3 is in a clockwise direction of the first symmetry axis A1, and a rotation angle is not greater than 90°. When a value of the first angle $\theta 1$ exceeds (-90°, 0) and/or a value of the second angle $\theta 2$ exceeds (0, 90°), the eyes of the user cannot obtain an image through fusion. In some embodiments, an absolute value of the first angle $\theta 1$ is equal to an absolute value of the second angle $\theta 2$. However, this is not limited thereto.

After passing through the lens assembly 120 of the first optical system 100e, image light of the display 110 of the first optical system 100e forms a left visible range VAL on the left eye of the user, as shown in (a) in FIG. 15. After passing through the lens assembly 120 of the second optical system 200e, image light of the display 110 of the second optical system 200e forms a right visible range VAR on the right eye of the user, as shown in (a) in FIG. 15. A binocular visible range VA5 is obtained after superimposition of the left visible range VAL and the right visible range VAR. In the first optical system 100e, the entire display area AA of the first display 111 is rotated counterclockwise around the geometric center O2 by the first angle $\theta 1$. Therefore, compared with the display device 1000a shown in (b) in FIG. 1B, in the display device 1000e, the left visible range VAL is entirely rotated leftward by the first angle $\theta 1$. Similarly, in the second optical system 200e, the entire display area AA of the second display 112 is rotated clockwise around the geometric center O2 by the second angle $\theta 2$. Therefore, compared with the display device 1000a in FIG. 1B, in the display device 1000e, the right visible range VAR is entirely rotated rightward by the second angle $\theta 2$. In this way, a diagonal field of view and the binocular visible range of the display device 1000e are improved.

In another embodiment, in the display device, the first display may have both a horizontal offset and a rotational offset, or both a vertical offset and a rotational offset, or a horizontal offset, a vertical offset, and a rotational offset relative to the optical axis of the first lens assembly. Similarly, the second display may have both a horizontal offset and a rotational offset, or both a vertical offset and a rotational offset, or a horizontal offset, a vertical offset, and a rotational offset relative to the optical axis of the second lens assembly.

That is, in the display device, the third symmetry axis of the display area of the first display can be obtained by rotating (for example, counterclockwise rotating), vertically translating (for example, upward or downward translating), or rotating (for example, counterclockwise rotating) and vertically translating (for example, upward or downward translating) the first symmetry axis of the first lens assembly. The third symmetry axis of the display area of the second display can be obtained by rotating (for example, clockwise rotating), vertically translating (for example, downward or upward translating), or rotating (for example, clockwise rotating) and vertically translating (for example, downward or upward translating) the first symmetry axis of the second lens assembly. In addition, when both the first display and the second display have vertical translation, translation directions of the first display and the second display are opposite.

In addition, to ensure that the eyes of the user can obtain a complete image through fusion, translation distances of both the first display and the second display in the horizontal direction do not exceed half sizes of the display areas of the first display and the second display in the horizontal direction, and translation distances of both the first display and the second display in the vertical direction do not exceed half sizes of the display areas of the first display and the second display in the vertical direction.

It should be noted that the foregoing display device may be further applied to the medical field. Specifically, the display device may be applied to a virtual endoscopy (Virtual Endoscopy, VE) system to simulate various endoscopic examination effects, to overcome a disadvantage that a conventional optical endoscope needs to be inserted into a human body. As a non-invasive examination method, the display device provides a diagnostic basis for a doctor or is applied to preoperative simulation of surgery and training of medical personnel.

In a display device in an embodiment of this application, displays of both a first optical system and a second optical system are OLED displays. A leftward translation distance of the display of the first optical system relative to a lens assembly of the first optical system is 10% of a display area of the display, and a rightward translation distance of the display of the second optical system relative to a lens assembly of the second optical system is 10% of a display area of the display, to provide additional resolution for the display device, thereby helping improve angular resolution and a horizontal field of view of the display device. A second polarization modulation assembly includes a second linear polarizer and a second quarter-wave plate. The second linear polarizer and the second quarter-wave plate are bonded together to form a two-in-one composite film layer, and a side on which the second linear polarizer is located is bonded to the display.

The lens assembly of the first optical system and the lens assembly of the second optical system are the same, and each includes a lens group 10, an optical splitting element 20, and a first polarization modulation assembly 30d. The optical splitting element 20 is a 5/5 optical splitting film formed on a first optical surface S1 through vapor deposition.

Specifically, both the first optical surface S1 and a second optical surface S2 of a first lens 11 are even-order aspheric surfaces, and both a third optical surface S3 and a fourth optical surface S4 of a second lens 12 are even-order aspheric surfaces. A surface profile equation of the even-order aspheric surface is the foregoing formula 2. Structural parameters are shown in Table 1 and Table 2 below.

**Table 1**

| Surface number | 1/c | k | r (mm) |
|---|---|---|---|
| S1 | -70.98003 | 4.717462 | 25.22645 |
| S2 | -197.9267 | 0 | 25.22645 |
| S3 | -47.75228 | -6.1431 | 24.20879 |
| S4 | -129.5794 | 0 | 24.20879 |

**Table 2**

| Surface number | $\alpha_1$ | $\alpha_2$ | $\alpha_3$ | $\alpha_4$ | $\alpha_5$ | $\alpha_6$ | $\alpha_7$ | $\alpha_8$ |
|---|---|---|---|---|---|---|---|---|
| S1 | 0 | -4.357E-07 | 2.169E-09 | 1.959E-13 | 1.999E-15 | -4.066E-18 | -5.172E-21 | 0 |
| S2 | 0 | -5.158E-06 | 2.033E-09 | 2.429E-12 | -1.466E-16 | 1.711E-18 | 3.139E-22 | 0 |
| S3 | 0 | 2.736E-06 | 4.326E-09 | -3.132E-12 | -2.759E-15 | -8.889E-19 | -6.745E-22 | 0 |
| S4 | 0 | 1.495E-05 | -1.391E-09 | -1.202E-12 | -1.768E-15 | -2.700E-17 | 5.108E-22 | 0 |

The fifth optical surface S5 is a bonding surface, a surface profile equation of the bonding surface is the foregoing formula 1, and structural parameters of the bonding surface are shown in Table 3 below.

**Table 3**

| Surface number | Ry (mm) | Rx (mm) | ky | kx | r (mm) |
|---|---|---|---|---|---|
| S5 | 3.68E+03 | 0 | 0 | 0 | 22.630919 |

The sixth optical surface S6 is a freeform surface, a surface profile equation of the freeform surface is the foregoing formula 3, and structural parameters of the freeform surface are shown in Table 4 below.

**Table 4**

| 1/c | k | r (mm) | Maximum term (Maximum Term) | Normalization radius (Norm Radius) |
|---|---|---|---|---|
| 42.69847365 | -2.001390336 | 22.63091911 | 35 | 100 |
| Coefficient $E_1$ of a term $x^1y^0$ | Coefficient $E_2$ of a term $x^0y^1$ | Coefficient $E_3$ of a term $x^2y^0$ | Coefficient $E_4$ of a term $x^1y^1$ | Coefficient $E_5$ of a term $x^2y^0$ |

(continued)

| 1/c | k | r (mm) | Maximum term (Maximum Term) | Normalization radius (Norm Radius) |
|---|---|---|---|---|
| 0.000E+00 | 0.000E+00 | -1.996E+01 | 9.022E-02 | -3.999E+01 |
| Coefficient $E_6$ of a term $x^3y^0$ | Coefficient $E_7$ of a term $x^2y^1$ | Coefficient $E_8$ of a term $x^1y^2$ | Coefficient $E_9$ of a term $x^0y^3$ | Coefficient $E_{10}$ of a term $x^4y^0$ |
| 1.791E+00 | -2.983E+00 | -3.322E-01 | -1.671E+00 | -3.619E+01 |
| Coefficient $E_{11}$ of a term $x^3y^1$ | Coefficient $E_{12}$ of a term $x^2y^2$ | Coefficient $E_{13}$ of a term $x^1y^3$ | Coefficient $E_{14}$ of a term $x^0y^4$ | Coefficient $E_{15}$ of a term $x^5y^0$ |
| -2.329E+01 | -1.084E+02 | -8.130E+00 | -9.548E+01 | -1.641E+01 |
| Coefficient $E_{16}$ of a term $x^4y^1$ | Coefficient $E_{17}$ of a term $x^3y^2$ | Coefficient $E_{18}$ of a term $x^2y^3$ | Coefficient $E_{19}$ of a term $x^1y^4$ | Coefficient $E_{20}$ of a term $x^0y^5$ |
| 4.761E+01 | 2.886E+01 | 9.451E+01 | 6.862E-01 | 1.544E+01 |
| Coefficient $E_{21}$ of a term $x^6y^0$ | Coefficient $E_{22}$ of a term $x^5y^1$ | Coefficient $E_{23}$ of a term $x^4y^2$ | Coefficient $E_{24}$ of a term $x^3y^3$ | Coefficient $E_{25}$ of a term $x^2y^4$ |
| -4.017E+03 | 4.058E+02 | -7.690E+03 | 4.896E+03 | -1.440E+04 |
| Coefficient $E_{26}$ of a term $x^1y^5$ | Coefficient $E_{27}$ of a term $x^0y^6$ | Coefficient $E_{28}$ of a term $x^7y^0$ | Coefficient $E_{29}$ of a term $x^6y^1$ | Coefficient $E_{30}$ of a term $x^5y^2$ |
| 1.027E+02 | -3.673E+03 | 0 | 0 | 0 |
| Coefficient $E_{31}$ of a term $x^4y^3$ | Coefficient $E_{32}$ of a term $x^3y^4$ | Coefficient $E_{33}$ of a term $x^2y^5$ | Coefficient $E_{34}$ of a term $x^1y^6$ | Coefficient $E_{35}$ of a term $x^0y^7$ |
| 0 | 0 | 0 | 0 | 0 |

As shown in FIG. 16, a horizontal coordinate is a spatial frequency in a unit of line pairs per millimeter (lp/mm), and a vertical coordinate is a modulus value of an optical transfer function (Optical Transfer Function, OTF). At a spatial frequency of 76 lp/mm and a wavelength of 550 nm, a value of a modulation transfer function (Modulation Transfer Function, MTF) is greater than 0.7, indicating high resolution and contrast.

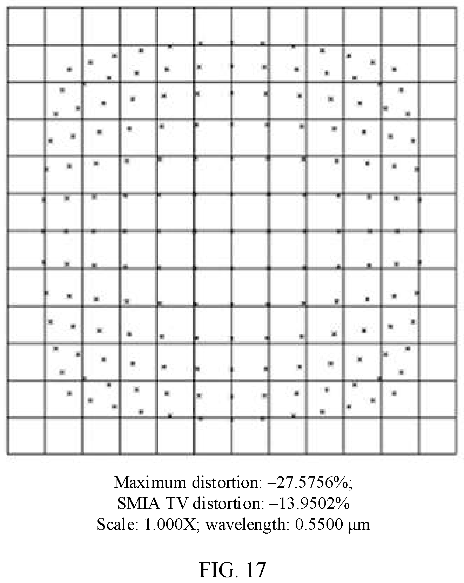

As shown in FIG. 17, maximum grid distortion is -27.5756%, and SMIA TV distortion is - 13.9502%.

The foregoing implementations are merely intended to describe the technical solutions of this application, but not intended to constitute any limitation. Although this application is described in detail with reference to the foregoing preferred implementations, a person of ordinary skill in the art should understand that modifications or equivalent replacements can be made to the technical solutions of this application, without departing from the spirit and scope of the technical solutions of this application.

**Claims**

1.   A lens assembly, comprising:

a plurality of lenses sequentially arranged from an object side to an image side, wherein each lens comprises an object side surface and an image side surface that are disposed opposite to each other, the object side surface of each lens faces the object side, and the image side surface of each lens faces the image side;
an optical splitting element, a first quarter-wave plate, and a reflective polarization element that are sequentially arranged from the object side to the image side; and
a lens barrel, wherein the plurality of lenses, the optical splitting element, the first quarter-wave plate, and the reflective polarization element are all located in the lens barrel, and are all located on an optical path between the object side and the image side, wherein
at least one of the first quarter-wave plate and the reflective polarization element is independent of the plurality of lenses and fastened to the lens barrel; or the object side surfaces and the image side surfaces of the plurality of lenses comprise at least one bonding surface, at least one of the first quarter-wave plate and the reflective polarization element is bonded to the bonding surface, and the bonding surface is a quadric surface whose curvature is zero in at least one direction.

2. The lens assembly according to claim 1, wherein a surface profile equation of the quadric surface whose curvature is zero in at least one direction is:

$$Z_1 = \frac{c_x x^2 + c_y y^2}{1 + \sqrt{1 - (1+k_x)c_x x^2 - (1+k_y)c_y y^2}};$$

and

in the surface profile equation of the quadric surface whose curvature is zero in at least one direction, $c_x = \frac{1}{Rx}$, $c_y = \frac{1}{Ry}$, Rx is a curvature radius of the bonding surface in a first direction, Ry is a curvature radius of the bonding surface in a second direction, $Z_1$ is a sagittal height of the bonding surface in a third direction, the first direction, the second direction, and the third direction are perpendicular to each other, $k_x$ and $k_y$ are conic coefficients, and at least one of Rx and Ry has an infinite value.

3. The lens assembly according to claim 1 or 2, wherein the object side surfaces and the image side surfaces of the plurality of lenses further comprise at least one of a freeform surface, a spherical surface, a rotationally symmetric aspheric surface, and a Fresnel surface.

4. The lens assembly according to claim 3, wherein the freeform surface comprises at least one of an extended polynomial surface, a Zernike polynomial surface, and a Q-type polynomial surface.

5. The lens assembly according to claim 3 or 4, wherein the object side surfaces and the image side surfaces of the plurality of lenses comprise the rotationally symmetric aspheric surface, and a surface profile equation of the rotationally symmetric aspheric surface is:

$$Z_2 = \frac{cr^2}{1 + \sqrt{1 - (1+k)c^2 r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16};$$

and

in the surface profile equation of the rotationally symmetric aspheric surface, $Z_2$ is a sagittal height of the rotationally symmetric aspheric surface, c is a curvature of the rotationally symmetric aspheric surface, k is a quadric surface coefficient of the rotationally symmetric aspheric surface, r is a semi-aperture of the lens to which the rotationally symmetric aspheric surface belongs, and $\alpha_1$, $\alpha_2$, $\alpha_3$, $\alpha_4$, $\alpha_5$, $\alpha_6$, $\alpha_7$, and $\alpha_8$ are respectively coefficients of a second-order term, a fourth-order term, a sixth-order term, a tenth-order term, a twelfth-order term, a fourteenth-order term, and a sixteenth-order term.

6. The lens assembly according to any one of claims 1 to 5, wherein the first quarter-wave plate and the reflective polarization element are combined into a laminate and bonded to the bonding surface; or the first quarter-wave plate and the reflective polarization element are combined into a laminate and fastened to the lens barrel; or the first quarter-wave plate and the reflective polarization element are respectively bonded to different bonding surfaces; or the first quarter-wave plate and the reflective polarization element are spaced apart and separately fastened to the lens barrel; or one of the first quarter-wave plate and the reflective polarization element is fastened to the lens barrel, and the other is bonded to the bonding surface.

7. The lens assembly according to any one of claims 1 to 6, wherein the plurality of lenses comprise a first lens, a second lens, and a third lens that are sequentially arranged from the object side to the image side, the optical splitting element is located on the object side surface of the first lens, and the object side surface of the third lens is the bonding surface.

8. The lens assembly according to claim 7, wherein the reflective polarization element and the first quarter-wave plate are combined into a laminate and bonded to the object side surface of the third lens.

9. The lens assembly according to claim 7, wherein the lens assembly further comprises a first linear polarizer, the first linear polarizer is bonded to a surface that is of the reflective polarization element and that is close to the image side, and the first linear polarizer, the reflective polarization element, and the first quarter-wave plate are combined into a laminate and bonded to the object side surface of the third lens.

10. The lens assembly according to claim 7, wherein the lens assembly further comprises an anti-reflection coating, the anti-reflection coating is bonded to a surface that is of the first quarter-wave plate and that is close to the object side, and the reflective polarization element, the first quarter-wave plate, and the anti-reflection coating are combined into a laminate and bonded to the object side surface of the third lens.

11. The lens assembly according to claim 7, wherein the lens assembly further comprises an anti-reflection coating and a first linear polarizer, the anti-reflection coating is bonded to a surface that is of the first quarter-wave plate and that is close to the object side, the first linear polarizer is bonded to a surface that is of the reflective polarization element and that is close to the image side, and the first linear polarizer, the reflective polarization element, the first quarter-wave plate, and the anti-reflection coating are combined into a laminate and bonded to the object side surface of the third lens.

12. The lens assembly according to any one of claims 1 to 11, wherein a center thickness of each lens ranges from 0.8 mm to 12 mm, and an edge thickness of each lens ranges from 0.8 mm to 12 mm.

13. The lens assembly according to any one of claims 1 to 12, wherein the plurality of lenses comprise a convex lens and/or a concave lens; when the plurality of lenses comprise a convex lens, a ratio of a center thickness to an edge thickness of the convex lens is less than 7:1; and when the plurality of lenses comprise a concave lens, a ratio of a center thickness to an edge thickness of the concave lens is greater than 1:7.

14. The lens assembly according to any one of claims 1 to 13, wherein the lens assembly further comprises a second quarter-wave plate located on a side that is of the optical splitting element and that is close to the object side.

15. The lens assembly according to claim 14, wherein the lens assembly further comprises a second linear polarizer located on a side that is of the second quarter-wave plate and that is away from the optical splitting element.

16. An optical system, comprising:

    the lens assembly according to any one of claims 1 to 15; and
    a display, located on the object side of the lens assembly, wherein the display is configured to emit image light to the lens assembly.

17. The optical system according to claim 16, wherein the lens assembly has a first symmetry axis and a second symmetry axis that are perpendicular to each other, and an intersection point of the first symmetry axis and the second symmetry axis is an optical axis center of the lens assembly; and a display area of the display is asymmetric with respect to at least one of the first symmetry axis and the second symmetry axis.

18. The optical system according to claim 17, wherein the display area has a third symmetry axis and a fourth symmetry axis that are perpendicular to each other; the third symmetry axis can be obtained by rotating the first symmetry axis by a preset angle and/or translating the first symmetry axis by a first distance in a direction parallel to the second symmetry axis, a range of the preset angle is (-90°, 90°), a value of the preset angle is negative when the third symmetry axis is in a counterclockwise direction of the first symmetry axis, the value of the preset angle is positive when the third symmetry axis is in a clockwise direction of the first symmetry axis, a range of the first distance is [0, 0.5*L), and L is a size of the display area in the direction parallel to the second symmetry axis; and the fourth symmetry axis can be obtained by rotating the second symmetry axis by the preset angle and/or translating the second symmetry axis by a second distance in a direction parallel to the first symmetry axis, a range of the second distance is [0, 0.5*W), and W is a size of the display area in the direction parallel to the first symmetry axis.

19. A display device, comprising:

    a housing; and
    a first optical system and a second optical system that are mounted on the housing, wherein
    the first optical system and the second optical system are the optical systems according to any one of claims 16 to 18.

20. The display device according to claim 19, wherein when a user wears the display device, the first optical system corresponds to a left eye of the user, the second optical system corresponds to a right eye of the user, and when both the display area of the first optical system and the display area of the second optical system have the third symmetry axis and the fourth symmetry axis:

in the first optical system, the third symmetry axis can be obtained by rotating the first symmetry axis counterclockwise and/or translating the first symmetry axis in a direction from a nasal bridge of the user to a forehead of the user, and the fourth symmetry axis can be obtained by rotating the second symmetry axis counterclockwise and/or translating the second symmetry axis in a direction from the right eye of the user to the left eye of the user; and
in the second optical system, the third symmetry axis can be obtained by rotating the first symmetry axis clockwise and/or translating the first symmetry axis in a direction from the forehead of the user to the nasal bridge of the user, and the fourth symmetry axis can be obtained by rotating the second symmetry axis clockwise and/or translating the second symmetry axis in a direction from the left eye of the user to the right eye of the user.

1000a

FIG. 1A

VA1

VAL    VAR

(a)

1000a

A2 (A4)                    A2 (A4)

120 (121)              120 (122)
100a {                                      } 200a
110 (111)              110 (112)

A1 (A3)                    A1 (A3)

O1 (O2)                    O1 (O2)

Y

AA                         AA

X

(b)

FIG. 1B

FIG. 1C

FIG. 2

Image side ←→ Object side

1c

120c

30c

10

20

40

32  31  34

13  12  11

42  41

110

E

AA

S6  S5  S4  S3  S2  S1

Y

X

Z

FIG. 3

Image side ← 1d → Object side

120d

30d 10 20 40

33 32 31 34 13 12 11 42 41

110

E

AA

Y
X
Z

S6 S5 S4 S3 S2 S1

FIG. 4

FIG. 5

1f

Image side ◄────────────────────────────────────────► Object side

FIG. 6

1g

Image side ← → Object side

S6  S5      S4   S3   30a      40
                     32   31   20      110

E

120g        13  12  11      S2  S1      AA
            10                          Y
                                        X
                                        Z

FIG. 7

FIG. 8

Image side ←——————————— 1i ———————————→ Object side

FIG. 9

FIG. 10

Image side ⟵ $\underline{1k}$ ⟶ Object side

10

30a
32  31
40
110
20
E
AA
Y
X
Z
120k
13
12
11

FIG. 11

FIG. 12

FIG. 13

VA4

VAL        VAR

(a)

1000d

A4  A2                    A2  A4

L1                    L2

W1                              W2

100d { 120 (121)                    O1

110 (111)              D3  D4      120 (122) } 200d

O2                              110 (112)

A3                              A1

A1                              A3

Y                  O1                              O2

X                    D1          D2

(b)

FIG. 14

VA5

VAL    VAR

(a)

1000e

A4    A2        A2    A4

100e { 120 (121)    120 (122) } 200e
      110 (111)    110 (112)
A1                        A1
A3                        A3
O1 (O2)              O1 (O2)

Y

X

θ1        θ2

(b)

FIG. 15

1.0

0.5

OTF modulus
value

0

0    7.6    15.2    22.8    30.4    38.0    45.6    53.2    60.8    68.4    76.0

Spatial frequency (lp/mm)

FIG. 16

Maximum distortion: –27.5756%;
SMIA TV distortion: –13.9502%
Scale: 1.000X; wavelength: 0.5500 μm

FIG. 17

## INTERNATIONAL SEARCH REPORT

| | International application No. |
|---|---|
| | **PCT/CN2024/106298** |

| A. | CLASSIFICATION OF SUBJECT MATTER |
|---|---|

G02B27/01(2006.01)i; G02B27/28(2006.01)i; G02B1/04(2006.01)i

According to International Patent Classification (IPC) or to both national classification and IPC

| B. | FIELDS SEARCHED |
|---|---|

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNABS, VEN, CNTXT, CJFD, ENTXT, ENTXTC: 偏振, 偏光, 反射, 波片, 相位, 补偿, 延迟, polari+, reflect+, wave 1w plate, phase, compensat+, delay+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111240022 A (NINGBO HONGYI OPTOELECTRONICS TECHNOLOGY CO., LTD.) 05 June 2020 (2020-06-05) description, paragraphs 54-149, and figures 1-10 | 1-20 |
| X | CN 115685557 A (HUAQIN TECHNOLOGY CO., LTD.) 03 February 2023 (2023-02-03) description, paragraphs 40-83, and figures 1-6 | 1-20 |
| X | CN 218938668 U (JIANGSU TONGXIN OPTICAL TECHNOLOGY CO., LTD.) 28 April 2023 (2023-04-28) description, paragraphs 37-70, and figures 1-8 | 1-20 |
| X | CN 216285989 U (DEJIA INTELLIGENT PHOTOELECTRIC (ZHENJIANG) CO., LTD.) 12 April 2022 (2022-04-12) description, paragraphs 30-83, and figures 1-4 | 1-20 |
| X | WO 2023092710 A1 (GOERTEK OPTICAL TECHNOLOGY CO., LTD.) 01 June 2023 (2023-06-01) description, paragraphs 46-129, and figures 1-12 | 1-20 |
| A | US 2021199975 A1 (SONY CORP.) 01 July 2021 (2021-07-01) entire document | 1-20 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 November 2024** | **12 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/106298** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP H0638246 A (OLYMPUS OPTICAL CO., LTD.) 10 February 1994 (1994-02-10)<br>entire document | 1-20 |

Form PCT/ISA/210 (second sheet) (July 2022)

**INTERNATIONAL SEARCH REPORT**
Information on patent family members

International application No.

**PCT/CN2024/106298**

| Patent document cited in search report | | | Publication date (day/month/year) | Patent family member(s) | | | Publication date (day/month/year) |
|---|---|---|---|---|---|---|---|
| CN | 111240022 | A | 05 June 2020 | None | | | |
| CN | 115685557 | A | 03 February 2023 | None | | | |
| CN | 218938668 | U | 28 April 2023 | None | | | |
| CN | 216285989 | U | 12 April 2022 | None | | | |
| WO | 2023092710 | A1 | 01 June 2023 | None | | | |
| US | 2021199975 | A1 | 01 July 2021 | JP | 2020024363 | A | 13 February 2020 |
| | | | | JP | 7215220 | B2 | 31 January 2023 |
| | | | | KR | 20210035176 | A | 31 March 2021 |
| | | | | US | 11467410 | B2 | 11 October 2022 |
| | | | | DE | 112019003875 | T5 | 22 April 2021 |
| JP | H0638246 | A | 10 February 1994 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311323567